# EUROPÄISCHE PATENTSCHRIFT

(11) **EP 4 493 018 B1**
(45) Veröffentlichungstag und Bekanntmachung des Hinweises auf die Patenterteilung: **04.03.2026**
(21) Anmeldenummer: 23714528.9
(22) Anmeldetag: 24.03.2023
(51) Int. Cl.: A44B 11/25, A44B 11/26, F16B 21/07, F16B 5/06, F16B 21/16

(54) **VERSCHLUSSVORRICHTUNG**
FASTENER
FERMOIR

(30) Priorität: 08.04.2022 DE 102022203587
(43) Veröffentlichungstag der Anmeldung: 22.01.2025
(73) Patentinhaber: Fidlock GmbH, 30659 Hannover (DE)
(72) Erfinder: HILLER, Lasse, 30952 Ronnenberg (DE)
(74) Vertreter: Maikowski & Ninnemann Patentanwälte Partnerschaft mbB
(86) Internationale Anmeldenummer: PCT/EP2023/057642
(87) Internationale Veröffentlichungsnummer: WO 2023/194121

(56) Entgegenhaltungen:
- WO-A1-2020/157289
- WO-A2-2009/103279

## Beschreibung

Die Erfindung betrifft eine Verschlussvorrichtung nach dem Oberbegriff des Anspruchs 1.

Eine solche Verschlussvorrichtung dient zum lösbaren Verbinden zweier Baugruppen miteinander.

Die Verschlussvorrichtung umfasst ein erstes Verschlussteil, das einen Körper aufweist. Die Verschlussvorrichtung umfasst zudem ein zweites Verschlussteil. Das erste Verschlussteil und das zweite Verschlussteil sind zum Schließen der Verschlussvorrichtung entlang einer Schließrichtung aneinander ansetzbar und sind in einer Schließstellung der Verschlussvorrichtung miteinander verbunden. Zum Öffnen der Verschlussvorrichtung können die Verschlussteile voneinander gelöst und somit voneinander abgenommen werden.

An dem Körper des ersten Verschlussteils ist zumindest ein Verriegelungselement angeordnet. An dem zweiten Verschlussteil ist demgegenüber zumindest eine Eingriffselement angeordnet, das zumindest einen Eingriffsabschnitt ausbildet. Das zumindest eine Eingriffselement steht in einer Verriegelungsstellung derart mit dem zumindest einen Eingriffsabschnitt in Eingriff, dass das erste Verschlussteil und das zweite Verschlussteil in der Schließstellung entlang der Schließrichtung aneinander gehalten sind. An dem ersten Verschlussteil ist eine Verstellbaugruppe angeordnet, die ein Verstellteil aufweist, das betätigbar ist, um das zumindest eine Verriegelungselement zum Lösen des ersten Verschlussteils und des zweiten Verschlussteils voneinander aus der Verriegelungsstellung in eine Richtung senkrecht oder schräg zur Schließrichtung relativ zu dem zumindest einen Eingriffsabschnitt zu bewegen. Das Verstellteil ist zum Bewegen des zumindest einen Verriegelungselements an dem Körper des ersten Verschlussteils verstellbar.

Bei einer aus der WO 2020/157289A1 bekannten Verschlussvorrichtung sind an einem Körper eines ersten Verschlussteils Verriegelungselemente zum Beispiel in Form von stangenförmigen Elementen angeordnet, die in Aufnahmeöffnungen an dem Körper geführt sind. Ein zweites Verschlussteil weist ein starres Eingriffselement auf, das in einer Schließstellung der Verschlussvorrichtung mit den Verriegelungselementen in Eingriff steht, sodass darüber die Verschlussteile in der Schließstellung fest und belastbar miteinander verbunden sind. Die Verriegelungselemente sind magnetisch ausgebildet, sodass die Verriegelungselemente in der Schließstellung in Richtung eines Eingriffs mit dem Eingriffselement magnetisch gespannt sind.

Bei der Verschlussvorrichtung, wie sie aus der WO 2020/157289A1 bekannt ist, wird ein fester Halt zwischen den Verschlussteilen hergestellt, der zudem durch Verstellen eines der Verriegelungselemente zum Aufheben der Verriegelung in einfacher, komfortabler Weise für einen Nutzer lösbar ist. Wünschenswert kann hierbei sein, die Bedienung für einen Nutzer weiter zu vereinfachen.

Aufgabe der vorliegenden Erfindung ist es, eine Verschlussvorrichtung zur Verfügung zu stellen, die in einer Schließstellung einen festen, belastbaren Halt zwischen den Verschlussteilen herstellen kann und dabei in einfacher, intuitiver Weise für einen Nutzer bedienbar ist.

Diese Aufgabe wird durch einen Gegenstand mit den Merkmalen des Anspruchs 1 gelöst.

Demnach ist die Verstellbaugruppe mit unterschiedlichen Öffnungsbewegungen zum Bewegen des zumindest einen Verriegelungselements relativ zu dem Körper betätigbar. Die Verstellbaugruppe ist zum Ausführen einer ersten Öffnungsbewegung entlang einer entlang der Schließrichtung gerichteten oder von der Schließrichtung abweichenden, ersten Verstellrichtung relativ zu dem Körper betätigbar und zum Ausführen einer von der ersten Öffnungsbewegung unterschiedlichen, zweiten Öffnungsbewegung entlang einer von der ersten Verstellrichtung abweichenden, zweiten Verstellrichtung relativ zu dem Körper betätigbar. Sowohl die erste Öffnungsbewegung als auch die zweite Öffnungsbewegung bewirken ein Bewegen des zumindest einen Verriegelungselements aus der Verriegelungsstellung.

In der Verriegelungsstellung ist das zumindest eine Verriegelungselement, das an dem Körper des ersten Verschlussteils angeordnet ist, in Eingriff mit dem zumindest einen Eingriffsabschnitt des Eingriffselements des zweiten Verschlussteils. Das Eingriffselement kann insgesamt starr ausgebildet sein, sodass die Eingriffsabschnitte starr an dem zweiten Verschlussteil geformt sind. In der Schließstellung sind die Verschlussteile durch den Eingriff des zumindest einen Verriegelungselements mit dem zumindest einen Eingriffsabschnitt fest und belastbar miteinander verbunden.

Zum Lösen der Verschlussteile voneinander, um auf diese Weise die Verschlussvorrichtung zu öffnen und die Verschlussteile voneinander abnehmen zu können, kann das zumindest eine Verriegelungselement an dem Körper des ersten Verschlussteils verstellt werden. Hierzu weist das erste Verschlussteil eine Verstellbaugruppe mit einem Verstellteil auf, die betätigbar ist, um das zumindest eine Verriegelungselement an dem Körper des ersten Verschlussteils zu verstellen. Das Verstellteil steht in Wirkverbindung mit dem zumindest einen Verriegelungselement. Durch Verstellen des Verstellteils an dem Körper des ersten Verschlussteils kann somit das zumindest eine Verriegelungselement an dem Körper aus der Verriegelungsstellung heraus verstellt werden, um auf diese Weise das zumindest eine Verriegelungselement außer Eingriff von dem Eingriffsabschnitt des Eingriffselements des zweiten Verschlussteils zu bringen.

Ist das zumindest eine Verriegelungselement außer Eingriff von dem zumindest einen Eingriffsabschnitt gebracht worden, ist die verriegelte Verbindung zwischen den Verschlussteilen aufgehoben, sodass die Verschlussteile voneinander abgenommen werden können und die Verschlussvorrichtung somit geöffnet werden kann.

Um hierbei eine für einen Nutzer besonders intuitive Bedienung zu ermöglichen, kann die Verstellbaugruppe mit unterschiedlichen Öffnungsbewegungen betätigt werden. Zur Betätigung der Verstellbaugruppe kann ein Nutzer zum Beispiel unmittelbar auf das Verstellteil einwirken. In anderer Ausgestaltung kann ein Nutzer auf ein weiteres, mit dem Verstellteil wirkverbundenes Betätigungsteil einwirken und durch Bewegen des Betätigungsteils das Verstellteil bewegen und somit mittelbar an dem Körper des ersten Verschlussteils verstellen.

Zum Ausführen einer Öffnungsbewegung ist die Verstellbaugruppe entlang einer entlang der Schließrichtung gerichteten oder von der Schließrichtung abweichenden, ersten Verstellrichtung relativ zu dem Körper betätigbar. Zudem ist die Verstellbaugruppe entlang einer von der ersten Verstellrichtung abweichenden, zweiten Verstellrichtung relativ zu dem Körper betätigbar. Die Verstellbaugruppe kann somit auf unterschiedliche Weise durch Bewegung in unterschiedliche Richtungen betätigt werden, wobei eine jede Betätigung dazu führt, dass das zumindest eine Verriegelungselement an dem Körper des ersten Verschlussteils aus der Verriegelungsstellung heraus verstellt wird.

Darunter, dass die Verstellbaugruppe entlang unterschiedlicher Verstellrichtungen betätigbar ist, ist vorliegend zu verstehen, dass das Verstellteil oder ein mit dem Verstellteil wirkverbundenes Betätigungsteil entlang unterschiedlicher Verstellrichtungen verstellt werden kann. Beispielsweise kann die Verschlussvorrichtung dazu ausgestaltet sein, dass ein Nutzer unmittelbar auf das Verstellteil einwirken kann, um die Verschlussvorrichtung zu öffnen. In anderer Ausgestaltung kann die Verschlussvorrichtung dazu ausgestaltet sein, dass ein Nutzer zum Öffnen der Verschlussvorrichtung auf ein Betätigungsteil einwirken kann, das mit dem Verstellteil wirkverbunden ist, sodass das Verstellteil mittelbar durch Betätigung des Betätigungsteils an dem Körper des ersten Verschlussteils verstellt wird. Die Öffnungsbewegung bezieht sich jeweils auf das von dem Nutzer zu betätigende Teil, also das Verstellteil oder das Betätigungsteil. Ist die Verschlussvorrichtung dazu ausgestaltet, dass das Verstellteil unmittelbar durch einen Nutzer zu betätigen ist, so kann das Verstellteil entlang der ersten Verstellrichtung, aber auch entlang der zweiten Verstellrichtung zum Öffnen der Verschlussvorrichtung, also zum Bewegen des zumindest einen Verriegelungselements aus der Verriegelungsstellung heraus, betätigt werden. Ist die Verschlussvorrichtung dazu ausgestaltet, dass ein mittelbar mit dem Verstellteil wirkverbundenes Betätigungsteil durch einen Nutzer zu betätigen ist, so kann das Betätigungsteil entlang der ersten Verstellrichtung, aber auch entlang der zweiten Verstellrichtung zum Öffnen der Verschlussvorrichtung, also zum Bewegen des zumindest einen Verriegelungselements aus der Verriegelungsstellung heraus, betätigt werden.

Dadurch, dass die Verstellbaugruppe durch einen Nutzer entlang unterschiedlicher Verstellrichtungen betätigt werden kann, wobei eine jede Betätigung zu einem Öffnen der Verschlussvorrichtung führt, kann ein Nutzer die Verschlussvorrichtung in intuitiver, komfortabler Weise öffnen. Ein Nutzer muss insbesondere nicht eine einzige vorgegebene Öffnungsbewegung erlernen, um die Verschlussvorrichtung öffnen zu können. Stattdessen kann die Verschlussvorrichtung durch unterschiedliche Bewegungen an der Verstellbaugruppe geöffnet werden.

Die erste Öffnungsbewegung kann insbesondere entlang der Schließrichtung gerichtet sein. Zum Öffnen der Verschlussvorrichtung kann die Verstellbaugruppe, also das Verstellteil oder ein mit dem Verstellteil wirkverbundenes Betätigungsteil, entlang der Schließrichtung relativ zu dem Körper des ersten Verschlussteils bewegt werden.

Denkbar ist aber auch, dass die erste Verstellrichtung von der Schließrichtung abweicht, beispielsweise schräg oder quer zur Schließrichtung gerichtet ist.

In einer Ausgestaltung umfasst die zweite Öffnungsbewegung eine Bewegung entlang einer zur Schließrichtung senkrechten oder schrägen Richtung, eine Kippbewegung um eine zur Schließrichtung senkrechte Kippachse und/oder eine Drehbewegung um eine entlang der Schließrichtung gerichtete Drehachse. Zum Ausführen der zweiten Öffnungsbewegung kann das Verstellteil oder ein mit dem Verstellteil wirkverbundenes Betätigungsteil somit zum Beispiel entlang einer zur Schließrichtung senkrechten oder schrägen Verstellrichtung, entlang einer um eine (zur Schließrichtung senkrechte) Kippachse gerichteten Verstellrichtung zum Verkippen des Verstellteils oder des mit dem Verstellteil wirkverbunden Betätigungsteils oder entlang einer um eine (entlang der Schließrichtung weisende) Drehachse gerichteten Verstellrichtung zum Verdrehen des Verstellteils oder des mit dem Verstellteil wirkverbundenen Betätigungsteils bewegt werden. Auch eine Kombination unterschiedlicher Bewegungen, beispielsweise eine lineare Verstellung in Kombination mit einer Dreh- oder Kippbewegung, kann möglich sein.

Weil die Verstellbaugruppe, also das Verstellteil oder das mit dem Verstellteil wirkverbundene Betätigungsteil, entlang unterschiedlicher Verstellrichtungen betätigt werden kann, kann ein Nutzer die Verschlussvorrichtung auf unterschiedliche Weise öffnen. Eine jede Öffnungsbewegung führt zu einem Bewegen des zumindest einen Verriegelungselements aus der Verriegelungsstellung heraus, sodass die Verriegelung über den Eingriff des zumindest einen Verriegelungselements mit dem Eingriffsabschnitt des Eingriffselements des zweiten Verschlussteils aufgehoben wird und die Verschlussteile entgegen der Schließrichtung voneinander abgenommen werden können.

In einer Ausgestaltung ist das Verstellteil (unmittelbar) durch einen Nutzer zum wahlweisen Ausführen der ersten Öffnungsbewegung oder der zweiten Öffnungsbewegung betätigbar. Das Entriegeln der Verschlussvorrichtung erfolgt somit durch Einwirken auf das Verstellteil, das dazu entlang unterschiedlicher Verstellrichtungen relativ zu dem Körper des ersten Verschlussteils verstellbar ist.

Das Verstellteil kann beispielsweise zum Ausführen der ersten Öffnungsbewegung entlang der Schließrichtung zu dem Körper zu bewegen sein. Die erste Verstellrichtung ist somit entlang der Schließrichtung gerichtet. Die zweite Öffnungsbewegung weicht von der ersten Öffnungsbewegung ab, sodass die zweite Verstellrichtung von der ersten Verstellrichtung, also von der Schließrichtung unterschiedlich ist, beispielsweise schräg zur Schließrichtung oder quer zur Schließrichtung gerichtet ist oder einer Dreh- oder Kipprichtung um eine zur Schließrichtung senkrechte Kippachse oder eine entlang der Schließrichtung gerichtete Drehachse entspricht.

In einer Ausgestaltung weist das Verstellteil und/oder der Körper einen Kraftumlenkabschnitt zur Herstellung einer Wirkverbindung zwischen dem Körper und dem Verstellteil auf. Der Kraftumlenkabschnitt ist dazu ausgebildet, bei Ausführen der zweiten Öffnungsbewegung eine Kraftumlenkung zum Verstellen des Verstellteils relativ zu dem Körper entlang der Schließrichtung zu bewirken. Der Kraftumlenkabschnitt kann insbesondere eine schräg zur Schließrichtung erstreckte Führungsfläche aufweisen, wobei die Führungsfläche geradlinig oder auch gekrümmt erstreckt sein kann.

Über den Kraftumlenkabschnitt erfolgt eine Bewegungsumlenkung (und zudem eine Kraftumlenkung) zum Umlenken der (zweiten) Öffnungsbewegung in eine Bewegung des Verstellteils entlang der Schließrichtung. Das Verstellteil kann somit zum Ausführen der zweiten Öffnungsbewegung in eine zweite Verstellrichtung bewegt werden, die sich von der Schließrichtung unterscheidet, indem die zweite Verstellrichtung beispielsweise schräg oder quer zur Schließrichtung gerichtet ist oder einer Drehrichtung um eine entlang der Schließrichtung weisende Drehachse entspricht. Die Bewegung des Verstellteils kann somit, zum Ausführen der zweiten Öffnungsbewegung, beispielsweise in einer zur Schließrichtung senkrechten Verstellebene erfolgen. Eine Bewegung des zweiten Verstellteils entlang der zweiten Verstellrichtung führt zu einer Bewegungsumlenkung, sodass das Verstellteil bei Ausführen der zweiten Öffnungsbewegung stets (auch) entlang der Schließrichtung bewegt wird und dadurch auf das zumindest eine Verriegelungselement am Körper des ersten Verschlussteils einwirkt, um das zumindest eine Verriegelungselement aus der Verriegelungsstellung heraus zu bewegen.

Der Kraftumlenkabschnitt kann starr beispielsweise an dem Körper des ersten Verschlussteils oder an dem Verstellteil angeordnet sein und beispielsweise eine schräge Ebene oder eine gekrümmte Ebene zur Bewegungsumlenkung verwirklichen. Der Kraftumlenkabschnitt kann aber auch verstellbar, zum Beispiel federvorgespannt, an dem Körper des ersten Verschlussteils oder an dem Verstellteil angeordnet sein. Eine solche Federvorspannung kann bewirken, dass ein Verstellen des Verstellteils zum Ausführen der zweiten Öffnungsbewegung nicht unmittelbar ein Verstellen des Verstellteils entlang der Schließrichtung zur Folge hat, sondern der Kraftumlenkabschnitt bei Verstellen des Verstellteils entlang der zweiten Verstellrichtung zunächst entgegen der Federvorspannung mitbewegt wird, bis die Kraft der Federvorspannung größer ist als eine Kraft, die einem Verstellen des Verstellteils entlang der Schließrichtung entgegenwirkt, beispielsweise eine magnetische Haltekraft oder einer Reibkraft. Das Verstellteil wird somit erst durch Bewegungsumlenkung an dem Kraftumlenkabschnitt entlang der Schließrichtung verstellt, wenn die an dem Kraftumlenkabschnitt wirkende Federvorspannung größer ist als eine Haltekraft des Verstellteils, die das Verstellteil entlang der Schließrichtung in Position an dem Körper des ersten Verschlussteils hält.

In anderer Ausgestaltung kann die Verstellbaugruppe ein mit dem Verstellteil wirkverbundenes Betätigungsteil aufweisen, wobei das Betätigungsteil durch einen Nutzer zum wahlweisen Ausführen der ersten Öffnungsbewegung oder der zweiten Öffnungsbewegung betätigbar ist. In diesem Fall erfolgt die Betätigung der Verstellbaugruppe somit nicht durch unmittelbares Einwirken auf das Verstellteil, sondern durch Betätigung des mit dem Verstellteil wirkverbundenen Betätigungsteils. Ein Nutzer bewegt somit zum Öffnen der Verschlussvorrichtung das Betätigungsteil, dessen Verstellbewegung auf das Verstellteil übertragen wird und zu einem mittelbaren Verstellen des Verstellteils an dem Körper des ersten Verschlussteils führt.

Bei dieser Ausgestaltung kann das Verstellteil beispielsweise ausschließlich entlang der Schließrichtung an dem Körper des ersten Verschlussteils verstellbar und dazu an dem Körper linear geführt sein. Das Betätigungsteil ist dazu ausgebildet, sowohl bei Ausführen der ersten Öffnungsbewegung als auch bei Ausführen der zweiten Öffnungsbewegung das Verstellteil entlang der Schließrichtung an dem Körper zu verstellen. Das Betätigungsteil kann somit mit unterschiedlichen Öffnungsbewegungen betätigt werden. Eine jede Öffnungsbewegung führt dazu, dass das Verstellteil an dem Körper des ersten Verschlussteils entlang der Schließrichtung bewegt wird und dadurch auf das zumindest eine Verriegelungselement einwirkt, sodass das zumindest eine Verriegelungselement an dem Körper des ersten Verschlussteils aus der Verriegelungsstellung heraus bewegt und somit außer Eingriff von dem Eingriffsabschnitt des Eingriffselements des zweiten Verschlussteils gebracht wird.

In einer Ausgestaltung weist das Verstellteil und/oder das Betätigungsteil einen Kraftumlenkabschnitt zur Herstellung einer Wirkverbindung zwischen dem Betätigungsteil und dem Verstellteil auf. Der Kraftumlenkabschnitt ist dazu ausgebildet, bei Ausführen der zweiten Öffnungsbewegung eine Kraftumlenkung zum Verstellen des Verstellteils relativ zu dem Körper entlang der Schließrichtung zu bewirken. Der Kraftumlenkabschnitt kann insbesondere eine schräg zur Schließrichtung erstreckte Führungsfläche aufweisen, wobei die Führungsfläche geradlinig oder auch gekrümmt erstreckt sein kann.

Über den Kraftumlenkabschnitt erfolgt bei dieser Ausgestaltung eine Bewegungsumlenkung (und zudem eine Kraftumlenkung) zum Umlenken der (zweiten) Öffnungsbewegung an dem Betätigungsteil in eine Bewegung des Verstellteils entlang der Schließrichtung. Das Betätigungsteil kann somit zum Ausführen der zweiten Öffnungsbewegung in eine zweite Verstellrichtung bewegt werden, die sich von der Schließrichtung unterscheidet, indem die zweite Verstellrichtung beispielsweise schräg oder quer zur Schließrichtung gerichtet ist oder einer Drehrichtung um eine entlang der Schließrichtung weisende Drehachse entspricht. Die Bewegung des Betätigungsteils kann somit zum Ausführen der zweiten Öffnungsbewegung beispielsweise in einer zur Schließrichtung senkrechten Verstellebene erfolgen. Eine Bewegung des Betätigungsteils entlang der zweiten Verstellrichtung führt zu einer Bewegungsumlenkung, sodass das Verstellteil bei Ausführen der zweiten Öffnungsbewegung entlang der Schließrichtung bewegt wird und dadurch auf das zumindest eine Verriegelungselement am Körper des ersten Verschlussteils einwirkt, um das zumindest eine Verriegelungselement aus der Verriegelungsstellung heraus zu bewegen.

Der Kraftumlenkabschnitt kann starr beispielsweise an dem Betätigungsteil oder an dem Verstellteil angeordnet sein und beispielsweise eine schräge Ebene oder eine gekrümmte Ebene zur Bewegungsumlenkung verwirklichen. Der Kraftumlenkabschnitt kann aber auch verstellbar, zum Beispiel federvorgespannt, an dem Betätigungsteil oder an dem Verstellteil angeordnet sein. Eine solche Federvorspannung kann bewirken, dass ein Verstellen des Betätigungsteils zum Ausführen der zweiten Öffnungsbewegung nicht unmittelbar ein Verstellen des Verstellteils entlang der Schließrichtung zur Folge hat, sondern der Kraftumlenkabschnitt bei Verstellen des Betätigungsteils entlang der zweiten Verstellrichtung zunächst entgegen der Federvorspannung mitbewegt wird, bis die Kraft der Federvorspannung größer ist als eine Kraft, die einem Verstellen des Verstellteils entlang der Schließrichtung entgegenwirkt, beispielsweise eine magnetische Haltekraft oder einer Reibkraft. Das Verstellteil wird somit erst durch Bewegungsumlenkung an dem Kraftumlenkabschnitt entlang der Schließrichtung verstellt, wenn die an dem Kraftumlenkabschnitt wirkende Federvorspannung größer ist als eine Haltekraft des Verstellteils, die das Verstellteil entlang der Schließrichtung in Position an dem Körper des ersten Verschlussteils hält.

In einer Ausgestaltung weist das Verstellteil einen Verstellkörper und ein an dem Verstellkörper angeordnetes Verstellelement auf, das ausgebildet ist, bei Verstellen des Verstellteils zum Lösen des ersten Verschlussteils und des zweiten Verschlussteils voneinander auf das zumindest eine Verriegelungselement einzuwirken. Das Verstellelement springt zum Beispiel quer zur Schließrichtung von dem Verstellkörper vor, sodass über das Verstellelement eine Wirkverbindung zwischen dem Verstellteil und dem zumindest einen Verriegelungselement hergestellt ist und bei Verstellen des Verstellteils entlang der Schließrichtung zum Öffnen der Verschlussvorrichtung das zumindest eine Verriegelungselement mitgenommen wird.

Der Verstellkörper des Verstellteils kann beispielsweise durch einen umfänglich um den Körper herum erstreckten, insbesondere rechteckigen oder ringförmigen Rahmen ausgebildet sein. Das Verstellelement springt beispielsweise quer zur Schließrichtung von dem Verstellkörper vor, beispielsweise indem das Verstellelement (radial) von dem Verstellkörper nach innen weist. Wird das Verstellteil an dem Körper des ersten Verschlussteils entlang der Schließrichtung bewegt, um auf diese Weise die Verschlussvorrichtung zu öffnen, wird über das Verstellelement das zumindest eine Verriegelungselement mitgenommen, sodass das Verriegelungselement außer Eingriff von dem Eingriffsabschnitt am Eingriffselement des zweiten Verschlussteils gebracht wird und die Verriegelung zwischen den Verschlussteilen auf diese Weise aufgehoben wird.

In einer Ausgestaltung weisen das erste Verschlussteil eine erste Magneteinrichtung und das zweite Verschlussteil eine zweite Magneteinrichtung auf. Die erste Magneteinrichtung und die zweite Magneteinrichtung wirken bei Ansetzen des ersten Verschlussteils und des zweiten Verschlussteils aneinander magnetisch anziehend zusammen. Das zumindest eine Verriegelungselement ist dabei vorzugsweise derart magnetisch ausgebildet, dass das zumindest eine Verriegelungselement in der Schließstellung durch die erste Magneteinrichtung und/oder die zweite Magneteinrichtung in Richtung eines Eingriffs mit dem zumindest einen Eingriffsabschnitt belastet ist.

Die Verschlussvorrichtung ist somit in einer Ausgestaltung als magnetische Verschlussvorrichtung ausgebildet. An dem ersten Verschlussteil und an dem zweiten Verschlussteil ist jeweils eine Magneteinrichtung angeordnet, beispielsweise jeweils ausgebildet durch einen Permanentmagneten oder an einem Verschlussteil durch einen Permanentmagneten und am anderen Verschlussteil durch einen magnetischen Anker aus einem ferromagnetischen Material. Die Magneteinrichtungen wirken derart magnetisch zusammen, dass bei Ansetzen der Verschlussteile aneinander die Verschlussteile aufeinander zu und in Eingriff miteinander gezogen werden und somit das Schließen der Verschlussvorrichtung magnetisch unterstützt wird.

Die Magneteinrichtungen dienen vorzugsweise auch zum Herstellen der Verriegelung zwischen dem ersten Verschlussteil und dem zweiten Verschlussteil in der Schließstellung.

So ist - zusätzlich zur ersten Magneteinrichtung am ersten Verschlussteil und zur zweiten Magneteinrichtung am zweiten Verschlussteil - das zumindest eine Verriegelungselement in einer vorteilhaften Ausgestaltung magnetisch ausgebildet, beispielsweise indem das zumindest eine Verriegelungselement ganz oder teilweise aus einem ferromagnetischen Material gefertigt oder permanentmagnetisch ausgebildet ist, sodass das zumindest eine Verriegelungselement magnetisch mit der ersten Magneteinrichtung des ersten Verschlussteils und/oder der zweiten Magneteinrichtung des zweiten Verschlussteils zusammenwirkt.

Das zumindest eine Verriegelungselement kann insbesondere als passiver Anker zum Beispiel aus einem ferromagnetischen Material ausgebildet sein, der magnetisch anziehend mit der als Permanentmagnet ausgebildeten Magneteinrichtung des ersten Verschlussteils und/oder des zweiten Verschlussteils zusammenwirkt. Alternativ kann das zumindest eine Verriegelungselement auch als Permanentmagnet und somit aktiv magnetisch ausgebildet sein.

Unabhängig davon, ob das zumindest eine Verriegelungselement aktiv oder passiv magnetisch ausgebildet ist, wirkt das zumindest eine Verriegelungselement derart magnetisch mit der Magneteinrichtung des ersten Verschlussteils und/oder der Magneteinrichtung des zweiten Verschlussteils zusammen, dass das zumindest eine Verriegelungselement in der Schließstellung mit einer magnetischen Anziehungskraft in Richtung eines Eingriffs mit dem zumindest einen Eingriffsabschnitt belastet ist.

Das magnetische Zusammenwirken ist insbesondere derart, dass in der Schließstellung das zumindest eine Verriegelungselement aufgrund der magnetischen Wechselwirkung in Eingriff mit dem zugeordneten Eingriffsabschnitt gezogen wird. In der Schließstellung greift das zumindest eine Verriegelungselement des ersten Verschlussteils in den zugeordneten Eingriffsabschnitt am zweiten Verschlussteil ein, sodass dadurch eine Verriegelung zwischen dem ersten Verschlussteil und dem zweiten Verschlussteil hergestellt ist. Die Verriegelung wird aufgrund der magnetischen Wechselwirkung gehalten, sodass die Verschlussteile in der Schließstellung fest und belastbar miteinander verbunden sind.

Anstelle einer magnetischen Ausgestaltung des zumindest einen Verriegelungselements kann das Verriegelungselement zum Beispiel nicht magnetisch ausgestaltet und zum Beispiel federmechanisch, zum Beispiel über eine Druckfeder in Richtung der Verriegelungsstellung relativ zu dem Körper vorgespannt sein.

Durch Einwirken auf das zumindest eine Verriegelungselement über das Verstellteil kann die Verriegelung - entgegen der Magnetwirkung - aufgehoben werden, sodass die Verschlussteile voneinander getrennt werden können. Dadurch, dass das zumindest eine Verriegelungselement außer Eingriff von dem zugeordneten Eingriffsabschnitt gebracht wird, können die Verschlussteile somit voneinander gelöst und die Verschlussvorrichtung geöffnet werden.

Beispielsweise wird das zumindest eine Verriegelungselement des ersten Verschlussteils in der Schließstellung durch die zweite Magneteinrichtung des zweiten Verschlussteils magnetisch angezogen und in Eingriff mit dem Eingriffsabschnitt des zweiten Verschlussteils gebracht. Aufgrund der magnetischen Wechselwirkung zwischen dem magnetischen Verriegelungselement und dem zweiten Verschlussteil wird somit bei Schließen der Verschlussvorrichtung die Verriegelung selbsttätig hergestellt, sodass die Verschlussteile in der Schließstellung fest und belastbar aneinander gehalten sind.

In der Öffnungsstellung kann das zumindest eine Verriegelungselement zum Beispiel durch Wechselwirkung mit der ersten Magneteinrichtung magnetisch in einer nach außen versetzten, entriegelten Stellung gehalten werden, sodass die Verschlussteile zum erneuten Schließen einfach und komfortabel aneinander angesetzt werden können.

In einer Ausgestaltung ist die erste Magneteinrichtung sowohl zu dem Körper des ersten Verschlussteils als auch zu dem Verstellteil beweglich. Die erste Magneteinrichtung ist somit weder fest mit dem Körper des ersten Verschlussteils noch fest mit dem an dem Körper des ersten Verschlussteils verstellbar angeordneten Verstellteil verbunden, sondern kann sowohl zu dem Körper als auch zu dem Verstellteil bewegt werden.

Dies ermöglicht insbesondere, dass die erste Magneteinrichtung bei der ersten Öffnungsbewegung und/oder bei der zweiten Öffnungsbewegung relativ zu dem Körper und/oder relativ zu dem Verstellteil mitbewegt wird. Beispielsweise kann die erste Magneteinrichtung bei einem Verstellen des Verstellteils entlang der Schließrichtung gemeinsam mit dem Verstellteil relativ zu dem Körper entlang der Schließrichtung verstellt werden. Auf diese Weise kann die erste Magneteinrichtung beispielsweise von der zweiten Magneteinrichtung des zweiten Verschlussteils entfernt werden, sodass (auch) eine magnetische Anziehungskraft zwischen den Magneteinrichtungen abgeschwächt wird und somit die Verschlussteile zum Öffnen der Verschlussvorrichtung in einfacher Weise voneinander abgenommen werden können, bei abgeschwächter magnetischer Anziehung zwischen den Magneteinrichtungen. Dadurch, dass die erste Magneteinrichtung auch zu dem Verstellteil bewegbar ist, kann das Verstellteil beispielsweise in ganz unterschiedlicher Weise zu dem Körper des ersten Verschlussteils verstellt werden, um durch Verstellen des Verstellteils auf das zumindest eine Verriegelungselement einzuwirken und dieses aus der Verriegelungsstellung heraus zu bewegen.

Insbesondere kann die erste Magneteinrichtung bei der ersten Öffnungsbewegung und/oder bei der zweiten Öffnungsbewegung relativ zu der zweiten Magneteinrichtung des zweiten Verschlussteils bewegt werden, sodass dadurch eine magnetische Wechselwirkung zwischen den Magneteinrichtungen beim Öffnen verändert, insbesondere reduziert oder gar umgepolt wird, sodass die Verschlussteile zum Öffnen der Verschlussvorrichtung in einfacher Weise voneinander abgenommen werden können.

Durch die Verstellbarkeit der ersten Magneteinrichtung an dem Körper können zudem Einflüsse von Toleranzen und Verschmutzungen ausgeglichen werden, sodass diese ein Schließen der Verschlussvorrichtung nicht erschweren. So kann die erste Magneteinrichtung beim Schließen der Verschlussvorrichtung ausweichen, indem sich die erste Magneteinrichtung zu dem Körper des ersten Verschlussteils und auch zu dem Verstellteil bewegen kann. Dies ermöglicht die Verschlussvorrichtung zuverlässig zu schließen, auch wenn beispielsweise Verschmutzungen im Bereich einer Eingriffsöffnung, mit der das Eingriffselement des zweiten Verschlussteils zum Schließen der Verschlussvorrichtung in Eingriff gebracht werden kann, vorhanden sind, die ansonsten gegebenenfalls einem Schließen der Verschlussvorrichtung entgegenwirken würden.

Die erste Magneteinrichtung kann entlang der Schließrichtung oder auch entlang einer (beliebigen) anderen Richtung zu dem Körper des ersten Verschlussteils und auch zu dem Verstellteil bewegbar sein.

Die erste Magneteinrichtung kann insbesondere an einem Gehäuseteil des ersten Verschlussteils angeordnet sein, das sowohl zu dem Körper des ersten Verschlussteils als auch zu dem an dem Körper des ersten Verschlussteils verstellbar angeordneten Verstellteil bewegbar ist.

Die erste Magneteinrichtung kann beispielsweise in geführter Weise zu dem Körper des ersten Verschlussteils verstellbar sein, beispielsweise entlang der Schließrichtung. Die erste Magneteinrichtung kann zusätzlich oder alternativ aber auch zum Beispiel zu dem Körper des ersten Verschlussteils verdrehbar oder verkippbar sein.

In einer Ausgestaltung kann die erste Magneteinrichtung beispielsweise an dem Betätigungsteil der Verstellbaugruppe angeordnet sein, das relativ zu dem Verstellteil verstellbar ist. Bei einem Betätigen des Betätigungsteils unter Anwendung der ersten Öffnungsbewegung oder unter Anwendung der zweiten Öffnungsbewegung wird die erste Magneteinrichtung somit gemeinsam mit dem Betätigungsteil relativ zu dem Körper des ersten Verschlussteils und gegebenenfalls auch zu dem an dem Körper angeordneten Verstellteil bewegt.

In einer Ausgestaltung nimmt das Verstellteil in der Schließstellung eine erste Stellung relativ zu dem Körper des ersten Verschlussteils ein und kann, um das zumindest eine Verriegelungselement aus der Verriegelungsstellung heraus zu bewegen, aus der ersten Stellung verstellt werden. Das Verstellteil befindet sich somit in einer nicht betätigten Stellung der Verstellbaugruppe in der ersten Stellung, wenn sich die Verschlussvorrichtung in der Schließstellung befindet. Durch Verstellen des Verstellteils aus dieser ersten Stellung heraus kann die Verschlussvorrichtungen entriegelt werden, indem das Verstellteil bewegt wird und dadurch auf das zumindest eine Verriegelungselement zum Entriegeln einwirkt.

Ein Rückstellen des Verstellteils in die erste Stellung nach dem Öffnen der Verschlussvorrichtung und bei erneutem Schließen der Verschlussvorrichtung kann hierbei durch Wechselwirkung zwischen dem Verstellteil und dem Gehäuseteil, an dem die erste Magneteinrichtung angeordnet ist, erfolgen. So ist vorzugsweise das Gehäuseteil derart mit dem Verstellteil wirkverbunden, dass das Verstellteil durch das Gehäuseteil aufgrund der magnetischen Anziehung zwischen der ersten Magneteinrichtung und der zweiten Magneteinrichtung und/oder zwischen der ersten Magneteinrichtung und dem zumindest einen Verriegelungselement vor dem Schließen beim Schließen der Verschlussvorrichtung in die erste Stellung zurückgestellt wird. Wird die Verschlussvorrichtung geschlossen, so ziehen sich die Magneteinrichtungen magnetisch an. Dadurch wird das Gehäuseteil, das die erste Magneteinrichtung trägt, an dem Körper des ersten Verschlussteils verstellt und stellt dadurch auch das Verstellteil zurück in seine erste Stellung, sodass die Verschlussvorrichtung durch einen Nutzer erneut zum Öffnen betätigt werden kann. In anderer Ausgestaltung kann auch eine magnetische Anziehung zwischen der ersten Magneteinrichtung und dem zumindest einen Verriegelungselement bestehen, die bewirkt, dass das Verstellteil bereits in der Öffnungsstellung in die erste Stellungzurückgestellt wird, indem die erste Magneteinrichtung zu dem Körper bewegt wird.

Zusätzlich oder alternativ zu der magnetischen Rückstellung des Verstellteils kann das Verstellteil oder ein anderes Teil, zum Beispiel ein Betätigungsteil der Verstellbaugruppe, beispielsweise über eine mechanische Feder vorgespannt sein, sodass das Verstellteil aufgrund einer Federvorspannung in die erste Stellung zurückgestellt wird.

Die erste Magneteinrichtung kann in der Schließstellung zum Beispiel eine definierte Grundstellung an dem Körper des ersten Verschlussteils einnehmen. In der Öffnungsstellung kann die erste Magneteinrichtung demgegenüber beispielsweise eine verschobene Stellung relativ zu dem Körper einnehmen, beispielsweise indem die erste Magneteinrichtung durch eine weitere Magneteinrichtung des ersten Verschlussteils, zum Beispiel ein ferromagnetisches Plättchen oder einen weiteren Permanentmagneten, oder durch eine vorspannende mechanische Feder in Richtung der verschobenen Stellung gehalten wird, wenn sich die Verschlussvorrichtung in der geöffneten Stellung befindet.

Dies kann für eine Anzeigefunktion verwendet werden, mit der angezeigt werden kann, ob die Verschlussvorrichtung geschlossen oder geöffnet ist. So kann die erste Magneteinrichtung oder ein Gehäuseteil, an dem die erste Magneteinrichtung angeordnet ist, eine Anzeigefunktion aufweisen, zum Beispiel indem an der Magneteinrichtung eine farbliche Markierung angeordnet ist oder indem ein Signalgeber, zum Beispiel ein elektrischer Signalgeber, beispielsweise ein Reed-Switch, mit der ersten Magneteinrichtung bzw. dem die erste Magneterrichtung tragenden Gehäuseteil zusammenwirkt. Befindet sich die Verschlussvorrichtung in der Öffnungsstellung, so nimmt die erste Magneteinrichtung die verschobene Stellung an dem Körper ein und kann dadurch anzeigen, dass die Verschlussvorrichtung geöffnet ist.

In einer Ausgestaltung weist das erste Verschlussteil eine Eingriffsöffnung auf, in die zum Schließen der Verschlussvorrichtung ein zum Beispiel zapfenförmiges Eingriffselement des zweiten Verschlussteils eingeführt werden kann. Das erste Verschlussteil ist somit als Female-Teil (mit einer Eingriffsöffnung) ausgebildet, während das andere, zweite Verschlussteil als Male-Teil (mit einem Eingriffselement) gestaltet ist.

In einer Ausgestaltung ist das zumindest eine Verriegelungselement in einer Ebene, die durch die Schließrichtung und eine quer zur Schließrichtung erstreckte Querrichtung aufgespannt ist, linear verstellbar. Alternativ kann das zumindest eine Verriegelungselement auch in der durch die Schließrichtung und die Querrichtung aufgespannten Ebene verschwenkbar sein. Jeweils ist das zumindest eine Verriegelungselement an dem ersten Verschlussteil verstellbar, um in einer Verriegelungsstellung in den zumindest einen Eingriffsabschnitt des zweiten Verschlussteils einzugreifen und die Verschlussteile somit in der Schließstellung miteinander zu verriegeln. Aus dieser Verriegelungsstellung ist das zumindest eine Verriegelungselement verstellbar, um die Verriegelung aufzuheben und die Verschlussteile somit in einfacher Weise voneinander lösen zu können.

Das zumindest eine Verriegelungselement ist vorzugsweise in einer Aufnahmeöffnung im Körper des ersten Verschlussteils aufgenommen und in dieser Aufnahmeöffnung verstellbar. Die Aufnahmeöffnung kann eine Führung für das zumindest eine Verriegelungselement vorgeben, um eine lineare Verstellbewegung oder eine Schwenkbewegung des zumindest einen Verriegelungselements an dem Körper des ersten Verschlussteils zu definieren.

In einer Ausgestaltung ist die Aufnahmeöffnung derart schräg zur Schließrichtung und zur Querrichtung erstreckt, dass das zumindest eine Verriegelungselement entlang einer schräg zur Schließrichtung und schräg zur Querrichtung erstreckten Bewegungsrichtung in der Aufnahmeöffnung verstellbar ist. In diesem Fall ist das zumindest eine Verriegelungselement linear an dem Körper des ersten Verschlussteils verstellbar. Die Bewegungsrichtung ist schräg zur Schließrichtung erstreckt, sodass das zumindest eine Verriegelungselement schräg zur Schließrichtung in Eingriff mit oder außer Eingriff von dem zumindest einen Eingriffsabschnitt gebracht werden kann.

Die schräge Ausrichtung der Aufnahmeöffnung kann derart sein, dass bei einem Ansetzen der Verschlussteile aneinander das zumindest eine Verriegelungselement selbsttätig in der Aufnahmeöffnung ausweichen kann. So kann bei einem Einwirken des Eingriffselements des zweiten Verschlussteils auf das zumindest eine Verriegelungselement das zumindest eine Verriegelungselement in der schräg zur Schließrichtung geneigten Aufnahmeöffnung so verschoben werden, dass das Eingriffselement an dem zumindest einen Verriegelungselement entlang bewegt und das zumindest eine Verriegelungselement in Eingriff mit dem zumindest einen Eingriffsabschnitt an dem Eingriffselement gebracht werden kann.

Ist das zumindest eine Verriegelungselement an dem Körper des ersten Verschlussteils verschwenkbar, so ist die Schwenkachse vorzugsweise entlang der Querrichtung gerichtet. Um die Schwenkachse ist das zumindest eine Verriegelungselement verschwenkbar, um das Verriegelungselement in Eingriff mit oder außer Eingriff von dem zumindest einen Eingriffsabschnitt zu bringen.

In einer Ausgestaltung weisen der Eingriffsabschnitt eine schräg zur Schließrichtung erstreckte, geradlinig erstreckte oder gekrümmte erste Schrägfläche und das erste Verschlussteil im Bereich der Aufnahmeöffnung eine schräg zur Schließrichtung erstreckte, geradlinig erstreckte oder gekrümmte zweite Schrägfläche auf. In der Schließstellung ist das zumindest eine Verriegelungselement zwischen der ersten Schrägfläche und der zweiten Schrägfläche angeordnet, sodass darüber eine Verriegelung zwischen dem ersten Verschlussteil und dem zweiten Verschlussteil hergestellt ist.

Die Verriegelung zwischen dem ersten Verschlussteil und dem zweiten Verschlussteil wirkt insbesondere entlang der Schließrichtung derart, dass das erste Verschlussteil und das zweite Verschlussteil entlang der Schließrichtung aneinander gehalten und somit nicht entlang der Schließrichtung ohne weiteres, jedenfalls nicht ohne Lösen der Verriegelung, voneinander lösbar sind. Werden die Verschlussteile entlang der Schließrichtung zueinander belastet, werden Kräfte über die Schrägflächen in das zumindest eine Verriegelungselement eingeleitet, wobei die Winkelstellung der Schrägflächen zueinander die Stärke und Festigkeit der Verriegelung bestimmt.

Die erste Schrägfläche und/oder die zweite Schrägfläche können bei den vorangehenden Ausgestaltungen gekrümmt oder geradlinig in der durch die Schließrichtung und die Querrichtung aufgespannten Ebene erstreckt sein. Ist die Schrägfläche gekrümmt ausgebildet, so ist die Tangente zumindest an einem Punkt der Schrägfläche schräg unter einem Winkel zur Schließrichtung gerichtet.

Die erste Schrägfläche und/oder die zweite Schrägfläche können insbesondere mit einem einheitlichen, konstanten Krümmungsradius oder mit einem variablen Krümmungsradius gekrümmt sein.

Weist die erste Schrägfläche und/oder die zweite Schrägfläche unterschiedliche Abschnitte auf, so können die Abschnitte gekrümmt oder geradlinig erstreckt sein. Beispielsweise können der erste Abschnitt und der zweite Abschnitt einer Schrägfläche jeweils gekrümmt sein, wobei eine Tangente am ersten Abschnitt derart schräg gestellt ist, dass sie unter einem Winkel größer Null zu der anderen Schrägfläche angeordnet ist, während eine Tangente am zweiten Abschnitt derart schräg gestellt ist, dass sie unter einem Winkel kleiner Null zu der anderen Schrägfläche erstreckt ist.

Bei den unterschiedlichen Abschnitten kann es sich auch um aneinander anschließende Abschnitte einer gekrümmten Fläche, insbesondere einer Kreisbahn handeln.

Eine Schrägfläche kann gekrümmte und geradlinig erstreckte Abschnitte aufweisen, die aneinander anschließen und gegebenenfalls unterschiedlich gerichtet sind.

In einer Ausgestaltung ist das zumindest eine Verriegelungselement senkrecht zu der durch die Schließrichtung und die Querrichtung aufgespannten Ebene längserstreckt. Das Verriegelungselement kann beispielsweise stabförmig (mit einer entlang einer Längsrichtung senkrecht zur Schließrichtung und zur Querrichtung zylindrischen Form) ausgebildet sein. In der Schließstellung ist das zumindest eine Verriegelungselement in Eingriff mit dem zugeordneten Eingriffsabschnitt. Zum Lösen der Verschlussteile voneinander kann das zumindest eine Verriegelungselement beispielsweise schräg zur Schließrichtung in der zugeordneten Aufnahmeöffnung am Körper des ersten Verschlussteils bewegt werden, um das zumindest eine Verriegelungselement außer Eingriff von dem zugeordneten Eingriffsabschnitt zu bringen.

Alternativ kann das zumindest eine Verriegelungselement ringförmig ausgebildet sein, wobei das zumindest eine Verriegelungselement in diesem Fall sich umfänglich um die Schließrichtung erstreckt und dabei umfänglich geschlossen oder umfänglich an einem Ort geöffnet (also als geöffneter Ring ausgebildet) ist. In der Schließstellung ist das zumindest eine Verriegelungselement in Eingriff mit einem zum Beispiel umlaufend um die Schließrichtung an einem Eingriffselement des zweiten Verschlussteils geformten Eingriffsabschnitt. Zum Lösen der Verbindung der Verschlussteile voneinander kann das zumindest eine Verriegelungselement verstellt werden, beispielsweise indem der Radius des ringförmigen Verriegelungselements geweitet und das Verriegelungselement somit außer Eingriff von dem zugeordneten Eingriffsabschnitt des zweiten Verschlussteils gebracht wird. Das Verriegelungselement ist in diesem Fall somit vorteilhafterweise zumindest abschnittsweise elastisch ausgebildet.

Der der Erfindung zugrunde liegende Gedanke soll nachfolgend anhand der in Figuren dargestellten Ausführungsbeispiele näher erläutert werden. Es zeigen:
- Fig. 1A, 1B: Explosionsansichten eines Ausführungsbeispiels einer Verschlussvorrichtung;
- Fig. 2A, 2B: Ansichten der Verschlussvorrichtung, in einer geöffneten Stellung;
- Fig. 3A: eine Draufsicht auf die Verschlussvorrichtung, in einer Schließstellung;
- Fig. 3B: eine Schnittansicht entlang der Linie A-A gemäß Fig. 3A;
- Fig. 3C: eine Schnittansicht entlang der Linie B-B gemäß Fig. 3A;
- Fig. 3D: eine perspektivische Ansicht der Verschlussvorrichtung;
- Fig. 4A: eine Draufsicht auf die Verschlussvorrichtung, in einer Schließstellung bei einer an einem ersten Verschlussteil verstellten Magneteinrichtung;
- Fig. 4B: eine Schnittansicht entlang der Linie A-A gemäß Fig. 4A;
- Fig. 4C: eine Schnittansicht entlang der Linie B-B gemäß Fig. 4A;
- Fig. 4D: eine perspektivische Ansicht der Verschlussvorrichtung;
- Fig. 5A: eine Draufsicht auf die Verschlussvorrichtung, beim Öffnen;
- Fig. 5B: eine Schnittansicht entlang der Linie A-A gemäß Fig. 5A, bei einer linearen Öffnungsbewegung eines Verstellteils der Verschlussvorrichtung am ersten Verschlussteil;
- Fig. 5C: eine Schnittansicht entlang der Linie B-B gemäß Fig. 5A;
- Fig. 5D: eine perspektivische Ansicht der Verschlussvorrichtung;
- Fig. 6A: eine Schnittansicht entlang der Linie A-A gemäß Fig. 5A, bei einer rotatorischen Öffnungsbewegung eines Verstellteils der Verschlussvorrichtung am ersten Verschlussteil;
- Fig. 6B: eine Schnittansicht entlang der Linie B-B gemäß Fig. 5A;
- Fig. 6C: eine perspektivische Ansicht der Verschlussvorrichtung;
- Fig. 7A: eine Draufsicht auf die Verschlussvorrichtung, beim Öffnen;
- Fig. 7B: eine Schnittansicht entlang der Linie A-A gemäß Fig. 7A, beim Trennen der Verschlussteile voneinander nach einer linearen Öffnungsbewegung eines Verstellteils der Verschlussvorrichtung am ersten Verschlussteil;
- Fig. 7C: eine Schnittansicht entlang der Linie B-B gemäß Fig. 7A;
- Fig. 7D: eine perspektivische Ansicht der Verschlussvorrichtung;
- Fig. 8A: eine Schnittansicht entlang der Linie A-A gemäß Fig. 7A, beim Trennen der Verschlussteile voneinander nach einer rotatorischen Öffnungsbewegung eines Verstellteils der Verschlussvorrichtung am ersten Verschlussteil;
- Fig. 8B: eine Schnittansicht entlang der Linie B-B gemäß Fig. 7A;
- Fig. 8C: eine perspektivische Ansicht der Verschlussvorrichtung;
- Fig. 9A: eine Draufsicht auf die Verschlussvorrichtung;
- Fig. 9B: eine Schnittansicht entlang der Linie A-A gemäß Fig. 9A, in einer Öffnungsstellung, in einer ersten Variante;
- Fig. 9C: eine Schnittansicht entlang der Linie B-B gemäß Fig. 9A;
- Fig. 9D: eine perspektivische Ansicht der Verschlussvorrichtung;
- Fig. 10A: eine Draufsicht auf die Verschlussvorrichtung;
- Fig. 10B: eine Schnittansicht entlang der Linie A-A gemäß Fig. 10A, in einer Öffnungsstellung, in einer zweiten Variante;
- Fig. 10C: eine Schnittansicht entlang der Linie B-B gemäß Fig. 10A;
- Fig. 10D: eine perspektivische Ansicht der Verschlussvorrichtung;
- Fig. 11A, 11B: Ansichten der Verschlussvorrichtung in der Schließstellung;
- Fig. 12A: eine Schnittansicht entlang der Linie C-C gemäß Fig. 11B;
- Fig. 12B: eine perspektivische Ansicht der Verschlussvorrichtung entsprechend der Anordnung nach Fig. 12A;
- Fig. 13A: eine Schnittansicht entlang einer Schnittlinie entsprechend der Linie C-C gemäß Fig. 11B, bei einem linearen Verstellen des Verstellteils;
- Fig. 13B: eine perspektivische Ansicht der Verschlussvorrichtung entsprechend der Anordnung nach Fig. 13A;
- Fig. 14A: eine Schnittansicht entlang der Linie C-C gemäß Fig. 11B;
- Fig. 14B: eine perspektivische Ansicht der Verschlussvorrichtung entsprechend der Anordnung nach Fig. 14A;
- Fig. 15A: eine Schnittansicht entlang einer Schnittlinie entsprechend der Linie C-C gemäß Fig. 11B, bei einem rotatorischen Verstellen des Verstellteils;
- Fig. 15B: eine perspektivische Ansicht der Verschlussvorrichtung entsprechend der Anordnung nach Fig. 15A;
- Fig. 16A, 16B: Explosionsansichten eines weiteren Ausführungsbeispiels einer Verschlussvorrichtung;
- Fig.17A, 17B: Ansichten der Verschlussvorrichtung, in einer geöffneten Stellung;
- Fig. 18A: eine Draufsicht auf die Verschlussvorrichtung, in einer Schließstellung;
- Fig. 18B: eine Schnittansicht entlang der Linie A-A gemäß Fig. 18A;
- Fig. 18C: eine Schnittansicht entlang der Linie B-B gemäß Fig. 18A;
- Fig. 18D: eine perspektivische Ansicht der Verschlussvorrichtung;
- Fig. 19A: eine Draufsicht auf die Verschlussvorrichtung, beim Öffnen;
- Fig. 19B: eine Schnittansicht entlang der Linie A-A gemäß Fig. 20A, bei einer linearen Öffnungsbewegung eines Verstellteils der Verschlussvorrichtung am ersten Verschlussteil;
- Fig. 19C: eine Schnittansicht entlang der Linie B-B gemäß Fig. 20A;
- Fig. 19D: eine perspektivische Ansicht der Verschlussvorrichtung;
- Fig. 20A: eine Schnittansicht entlang der Linie A-A gemäß Fig. 19A, bei einer rotatorischen Öffnungsbewegung eines Verstellteils der Verschlussvorrichtung am ersten Verschlussteil;
- Fig. 20B: eine Schnittansicht entlang der Linie B-B gemäß Fig. 19A;
- Fig. 20C: eine perspektivische Ansicht der Verschlussvorrichtung;
- Fig. 21A: eine Draufsicht auf die Verschlussvorrichtung, beim Öffnen;
- Fig. 21B: eine Schnittansicht entlang der Linie A-A gemäß Fig. 21A, beim Trennen der Verschlussteile voneinander nach einer linearen Öffnungsbewegung eines Verstellteils der Verschlussvorrichtung am ersten Verschlussteil;
- Fig. 21C: eine Schnittansicht entlang der Linie B-B gemäß Fig. 21A;
- Fig. 21D: eine perspektivische Ansicht der Verschlussvorrichtung;
- Fig. 22A: eine Schnittansicht entlang der Linie A-A gemäß Fig. 21A, beim Trennen der Verschlussteile voneinander nach einer rotatorischen Öffnungsbewegung eines Verstellteils der Verschlussvorrichtung am ersten Verschlussteil;
- Fig. 22B: eine Schnittansicht entlang der Linie B-B gemäß Fig. 21A;
- Fig. 22C: eine perspektivische Ansicht der Verschlussvorrichtung;
- Fig. 23A: eine Draufsicht auf die Verschlussvorrichtung;
- Fig. 23B: eine Schnittansicht entlang der Linie A-A gemäß Fig. 23A, in einer Öffnungsstellung, in einer ersten Variante;
- Fig. 23C: eine Schnittansicht entlang der Linie B-B gemäß Fig. 23A;
- Fig. 23D: eine perspektivische Ansicht der Verschlussvorrichtung;
- Fig. 24A: eine Draufsicht auf die Verschlussvorrichtung;
- Fig. 24B: eine Schnittansicht entlang der Linie A-A gemäß Fig. 24A, in einer Öffnungsstellung, in einer zweiten Variante;
- Fig. 24C: eine Schnittansicht entlang der Linie B-B gemäß Fig. 24A;
- Fig. 24D: eine perspektivische Ansicht der Verschlussvorrichtung;
- Fig. 25A, 25B: Ansichten der Verschlussvorrichtung in der Schließstellung;
- Fig. 26A: eine Schnittansicht entlang der Linie C-C gemäß Fig. 25B;
- Fig. 26B: eine perspektivische Ansicht der Verschlussvorrichtung entsprechend der Anordnung nach Fig. 26A;
- Fig. 27A: eine Schnittansicht entlang einer Schnittlinie entsprechend der Linie C-C gemäß Fig. 25B, bei einem linearen Verstellen des Verstellteils;
- Fig. 27B: eine perspektivische Ansicht der Verschlussvorrichtung entsprechend der Anordnung nach Fig. 27A;
- Fig. 28A: eine Schnittansicht entlang der Linie C-C gemäß Fig. 25B;
- Fig. 28B: eine perspektivische Ansicht der Verschlussvorrichtung entsprechend der Anordnung nach Fig. 28A;
- Fig. 29A: eine Schnittansicht entlang einer Schnittlinie entsprechend der Linie C-C gemäß Fig. 25B, bei einem rotatorischen Verstellen des Verstellteils;
- Fig. 29B: eine perspektivische Ansicht der Verschlussvorrichtung entsprechend der Anordnung nach Fig. 29A;
- Fig. 30: eine Explosionsansicht eines weiteren Ausführungsbeispiels einer Verschlussvorrichtung;
- Fig. 31: eine andere Explosionsansicht der Verschlussvorrichtung;
- Fig. 32A: eine Ansicht der Verschlussvorrichtung, in einer Schließstellung;
- Fig. 32B: eine Draufsicht auf die Anordnung nach Fig. 32A;
- Fig. 32C: eine Schnittansicht entlang der Linie A-A gemäß Fig. 32B;
- Fig. 32D: eine Schnittansicht entlang der Linie B-B gemäß Fig. 32B;
- Fig. 32E: eine Schnittansicht entlang der Linie C-C gemäß Fig. 32B;
- Fig. 33A: eine Ansicht der Verschlussvorrichtung, beim Öffnen unter Anwendung einer ersten Öffnungsbewegung;
- Fig. 33B: eine Draufsicht auf die Anordnung nach Fig. 33A;
- Fig. 33C: eine Schnittansicht entlang der Linie A-A gemäß Fig. 33B;
- Fig. 33D: eine Schnittansicht entlang der Linie B-B gemäß Fig. 33B;
- Fig. 33E: eine Schnittansicht entlang der Linie C-C gemäß Fig. 33B;
- Fig. 34A: eine Ansicht der Verschlussvorrichtung, beim weiteren Öffnen;
- Fig. 34B: eine Draufsicht auf die Anordnung nach Fig. 34A;
- Fig. 34C: eine Schnittansicht entlang der Linie A-A gemäß Fig. 34B;
- Fig. 34D: eine Schnittansicht entlang der Linie B-B gemäß Fig. 34B;
- Fig. 34E: eine Schnittansicht entlang der Linie C-C gemäß Fig. 34B;
- Fig. 35A: eine Ansicht der Verschlussvorrichtung, beim Öffnen unter Anwendung einer zweiten Öffnungsbewegung;
- Fig. 35B: eine Draufsicht auf die Anordnung nach Fig. 35A;
- Fig. 35C: eine Schnittansicht entlang der Linie A-A gemäß Fig. 35B;
- Fig. 35D: eine Schnittansicht entlang der Linie B-B gemäß Fig. 35B;
- Fig. 35E: eine Schnittansicht entlang der Linie C-C gemäß Fig. 35B;
- Fig. 36: eine Explosionsansicht eines weiteren Ausführungsbeispiels einer Verschlussvorrichtung;
- Fig. 37A: eine Ansicht der Verschlussvorrichtung, in einer Schließstellung;
- Fig. 37B: eine Draufsicht auf die Anordnung nach Fig. 37A;
- Fig. 37C: eine Schnittansicht entlang der Linie A-A gemäß Fig. 37B;
- Fig. 37D: eine Schnittansicht entlang der Linie B-B gemäß Fig. 37B;
- Fig. 37E: eine Schnittansicht entlang der Linie C-C gemäß Fig. 37B;
- Fig. 38A: eine Ansicht der Verschlussvorrichtung, beim Öffnen;
- Fig. 38B: eine Draufsicht auf die Anordnung nach Fig. 38A;
- Fig. 38C: eine Schnittansicht entlang der Linie A-A gemäß Fig. 38B;
- Fig. 38D: eine Schnittansicht entlang der Linie B-B gemäß Fig. 38B;
- Fig. 38E: eine Schnittansicht entlang der Linie C-C gemäß Fig. 38B;
- Fig. 39A: eine Ansicht der Verschlussvorrichtung, in einer geöffneten Stellung;
- Fig. 39B: eine Draufsicht auf die Anordnung nach Fig. 39A;
- Fig. 39C: eine Schnittansicht entlang der Linie A-A gemäß Fig. 39B;
- Fig. 39D: eine Schnittansicht entlang der Linie B-B gemäß Fig. 39B; und
- Fig. 39E: eine Schnittansicht entlang der Linie C-C gemäß Fig. 39B.

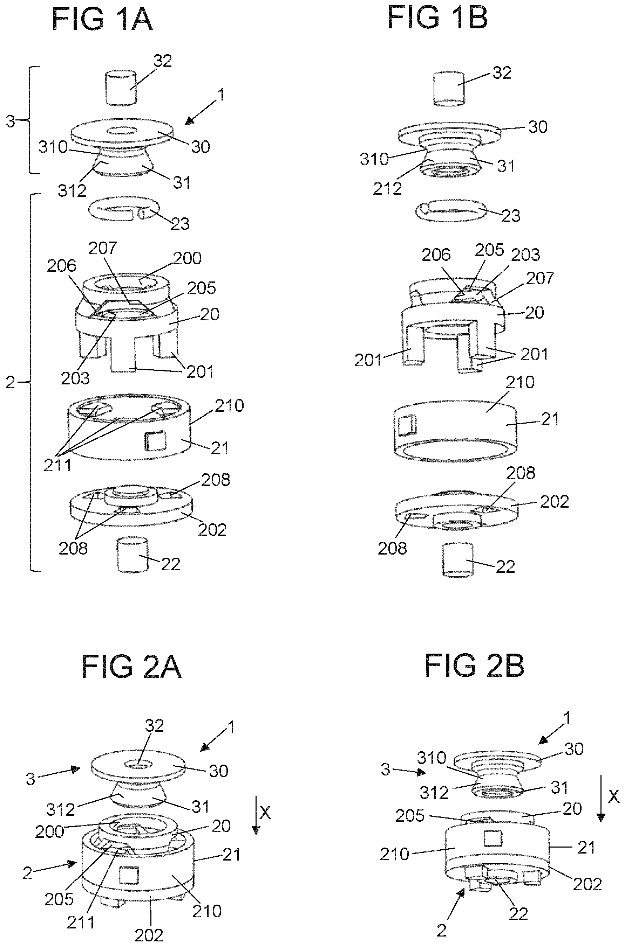

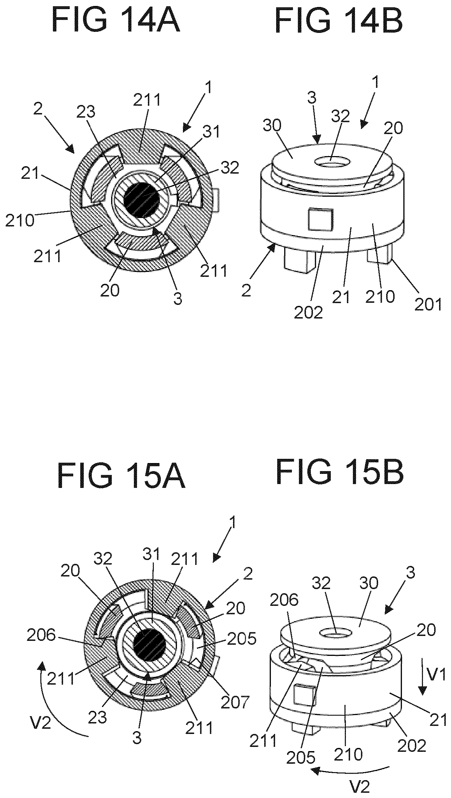

Fig. 1A, 1B bis 15A, 15B zeigen ein Ausführungsbeispiel einer Verschlussvorrichtung 1, die ein erstes Verschlussteil 2 und ein zweites Verschlussteil 3 aufweist. Die Verschlussteile 2, 3 können entlang einer Schließrichtung X aneinander angesetzt werden und stehen in einer Schließstellung miteinander in Verbindung, sodass die Verschlussteile 2, 3 sicher und zuverlässig insbesondere entgegen der Schließrichtung X aneinander gehalten sind.

Das erste Verschlussteil 2 weist einen Körper 20 auf, der eine Eingriffsöffnung 200 ausbildet, in die das zweite Verschlussteil 3 mit einem an einer Basis 30 geformten Eingriffselement 31 in Eingriff gebracht werden kann. In der Schließstellung greift das Eingriffselement 31 in die Eingriffsöffnung 200 ein und ist über ein Verriegelungselement 23 mit dem ersten Verschlussteil 2 verriegelt, sodass die Verschlussteile 2, 3 aneinander gehalten sind.

Das Verriegelungselement 23 weist bei dem dargestellten Ausführungsbeispiel eine ringförmige Gestalt in Form eines C-Rings auf. Das Verriegelungselement 23 ist umfänglich an einer Stelle geöffnet, sodass das Verriegelungselement 23 unter elastischer Verformung radial geweitet werden kann.

Das Verriegelungselement 23 liegt in einer innerhalb des Körpers 20 gebildeten Aufnahmeöffnung 203 ein, die die Form eines Kegelstumpfes aufweist und durch Schrägflächen 204 außenseitig begrenzt ist.

In dem Körper 20 sind Eingriffsöffnungen 205 geformt, in die ein Verstellteil 21 mit daran geformten Verstellelementen 211 in Form von nach innen vorstehenden Zapfen eingreift. Das Verstellteil 21 weist bei dem dargestellten Ausführungsbeispiel eine Ringform auf und ist an dem Körper 20 angeordnet derart, dass das Verstellteil 21 den Körper 20 außenseitig mit einem ringförmigen Verstellkörper 210 umgibt.

Das Verstellteil 21 weist insgesamt drei nach innen ragende Verstellelemente 211 auf, die innenseitig des Verstellkörpers 210 entlang einer Umfangsrichtung um die Schließrichtung X regelmäßig zueinander angeordnet sind und jeweils in eine zugeordnete Eingriffsöffnung 205 am Körper 20 des ersten Verschlussteils 2 eingreifen.

An dem Körper 20 sind Führungszapfen 201 geformt, die axial entlang der Schließrichtung X von dem Körper 20 vorstehen und in Führungsöffnungen 208 eines Gehäuseteils 202 eingreifen. Das Gehäuseteil 202 ist dadurch an den Führungszapfen 201 entlang der Schließrichtung X verstellbar geführt und kann somit zu dem Körper 20 bewegt werden.

Das zweite Verschlussteil 3 bildet an dem Eingriffselement 31 einen Eingriffsabschnitt 310 aus, der durch eine kegelstumpfförmige, eine Schrägfläche 312 ausbildende Mantelfläche des Eingriffselements 31 geformt ist.

An dem ersten Verschlussteil 2 ist eine erste Magneteinrichtung 22 angeordnet, die an dem Gehäuseteil 202 befestigt ist und somit mit dem Gehäuseteil 102 relativ zu dem Körper 20 verstellbar ist. Das zweite Verschlussteil 3 weist eine zweite Magneteinrichtung 32 auf, die innerhalb des Eingriffselements 31 angeordnet ist.

Die Magneteinrichtungen 22, 32 können beispielsweise jeweils durch einen Permanentmagneten gebildet sein. Denkbar ist aber auch, dass eine der Magneteinrichtungen 22, 32 durch einen Permanentmagneten und die andere der Magneteinrichtungen 22, 32 durch einen magnetischen Anker, gefertigt aus einem ferromagnetischen Material, geformt ist.

Die Magneteinrichtungen 22, 32 wirken magnetisch anziehend zusammen, sodass beim Ansetzen der Verschlussteile 2, 3 aneinander zum Schließen der Verschlussvorrichtung 1 eine magnetische Anziehungskraft zwischen den Verschlussteilen 2, 3 besteht und die Verschlussteile 2, 3 somit magnetisch zueinander hin gezogen werden. Das Ansetzen der Verschlussteile 2, 3 wird somit magnetisch unterstützt vorzugsweise derart, dass die Verschlussteile 2, 3 bei Annäherung aneinander weitestgehend selbsttätig in Eingriff miteinander gezogen werden und somit in die Schließstellung gelangen.

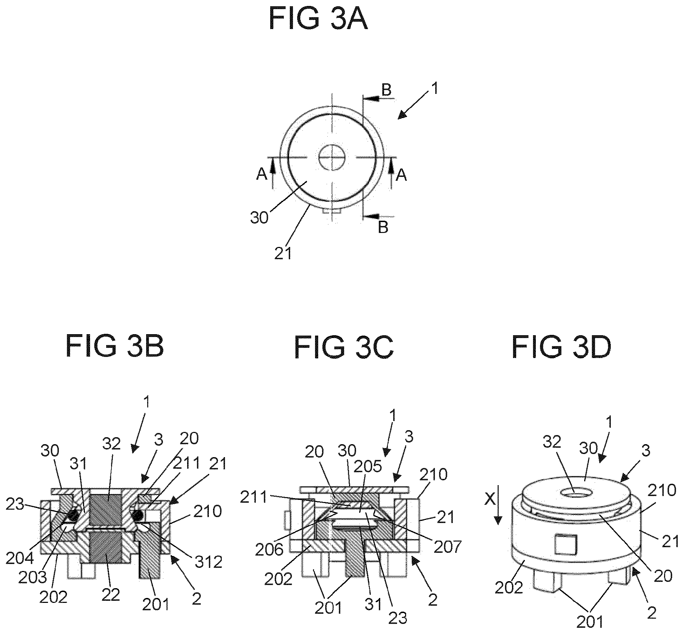

Fig. 3A-3D zeigen die Verschlussvorrichtung 1 in der Schließstellung. Wie insbesondere aus der Schnittansicht gemäß Fig. 3B ersichtlich ist, umgibt das innerhalb der Aufnahmeöffnung 203 angeordnete Verriegelungselement 23 in Form des geöffneten C-Rings in der Schließstellung das Eingriffselement 31 des zweiten Verschlussteils 3 umfänglich, sodass das Verriegelungselement 23 zwischen der Schrägfläche 312 am Eingriffselement 31 und der Schrägfläche 204 innenseitig des Körpers 20 angeordnet ist.

Das Verriegelungselement 23 ist vorzugsweise aus einem magnetischen Material, zum Beispiel einem ferromagnetischen Material ausgebildet und wirkt somit mit den Magneteinrichtungen 22, 32 zusammen. Insbesondere kann das Verriegelungselement 23 aufgrund der magnetischen Wechselwirkung in die in Fig. 3B dargestellte Verriegelungsstellung belastet sein, sodass das Verriegelungselement 23 nach Einsetzen des Verschlussteils 3 in das Verschlussteil 2 selbsttätig in die verriegelte Stellung gemäß Fig. 3A-3D gelangt.

Bei Belastung der Verschlussteile 2, 3 entgegen der Schließrichtung X relativ zueinander verklemmt das Verriegelungselement 23 zwischen den Schrägflächen 204, 312, sodass das zweite Verschlussteil 3 mit dem Eingriffselement 31 nicht aus der Eingriffsöffnung 200 am Körper 20 des ersten Verschlussteils 2 herausgezogen werden kann. Die Verschlussteile 2, 3 sind somit durch das Verriegelungselement 23 miteinander verriegelt und damit mechanisch belastbar aneinander gehalten.

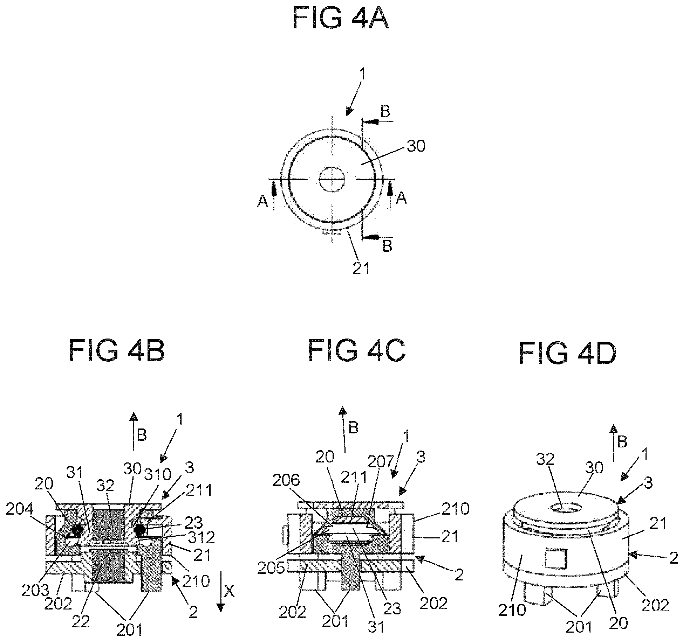

Wie dies aus Fig. 4A-4D ersichtlich ist, ist das Gehäuseteil 202 zu dem Körper 20 bewegbar. Das Gehäuseteil 202 ist somit nicht fest mit dem Körper 20 verbunden, sondern kann zu dem Körper 20 verstellt werden.

Die Verstellbarkeit des Gehäuseteils 202 bringt insbesondere den Vorteil mit sich, dass die Verschlussteile 2, 3 toleranzunempfindlich und insbesondere auch unempfindlich gegen Verschmutzung aneinander angesetzt werden können. Beispielsweise bei einer Verschmutzung kann das Gehäuseteil 202 ausweichen, sodass das Verschlussteil 3 mit dem Eingriffselement 31 sicher und zuverlässig in die Eingriffsöffnung 200 am Körper 20 des Verschlussteils 2 eingesetzt und über das Verriegelungselement 23 verriegelt werden kann.

Zudem kann das Gehäuseteil 202 bei Öffnen der Verschlussvorrichtung 1 zu dem Körper 20 bewegt werden, um beim Öffnen die magnetische Anziehung zwischen den Magneteinrichtungen 22, 32 abzuschwächen und somit ein einfaches, haptisch angenehmes, komfortables Entnehmen der Verschlussteile 2, 3 voneinander zu ermöglichen.

Zum Öffnen der Verschlussvorrichtung 1 kann ein Nutzer das Verstellteil 21 betätigen. Das Verstellteil 21 verwirklicht eine Verstellbaugruppe, die zu betätigen ist, um die Verschlussvorrichtung 1 aus der Schließstellung zu öffnen und die Verschlussteile 2, 3 somit voneinander zu trennen.

Das Verstellteil 21 kann mit unterschiedlichen Öffnungsbewegungen betätigt werden. So kann das Verstellteil 21 bei dem dargestellten Ausführungsbeispiel linear entlang der Schließrichtung X an dem Körper 20 verschoben werden, um dadurch das Verriegelungselement 23 zu entriegeln. Zudem kann das Verstellteil 21 um die Schließrichtung X an dem Körper 20 verdreht werden, wodurch ebenfalls das Verriegelungselement 23 entriegelt wird.

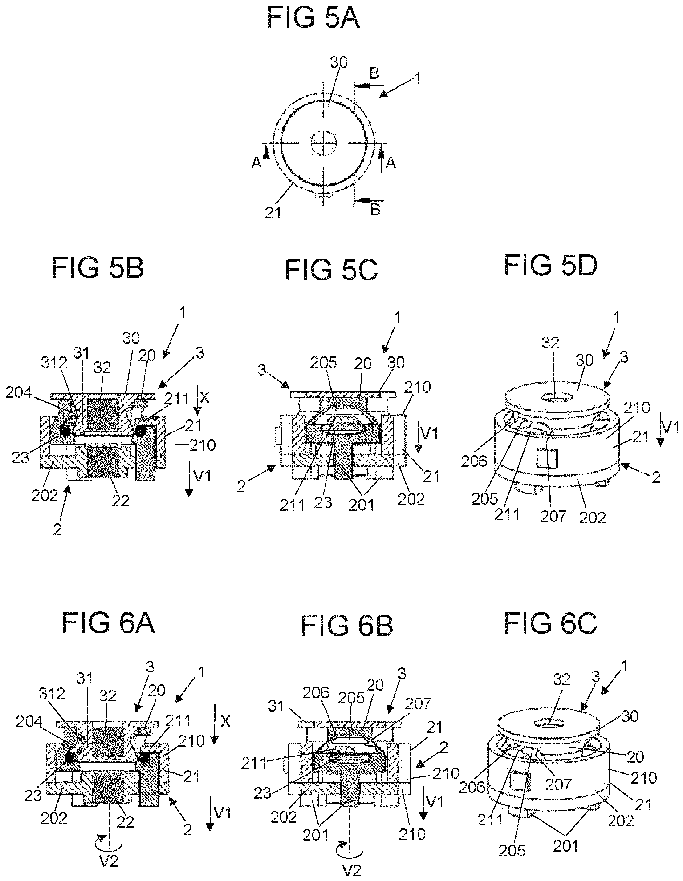

Fig. 5A-5D zeigen die Verschlussvorrichtung 1 beim Öffnen durch lineares Verschieben des Verstellteils 21 entlang einer Verstellrichtung V1 relativ zu dem Körper 20. Dazu kann ein Nutzer 21 an dem Verstellteil 21 angreifen und das Verstellteil 21 in die Verstellrichtung V1 und somit entlang der Schließrichtung X an dem Körper 20 des ersten Verschlussteils 2 verschieben. Das Verstellteil 21 greift mit den Verstellelementen 211 innenseitig des Verstellkörpers 210 in die Eingriffsöffnungen 205 an dem Körper 20 des ersten Verschlussteils 2 ein derart, dass die Verstellelemente 211 in die Aufnahmeöffnung 203 hineinragen und somit in Wirkverbindung mit dem Verriegelungselement 23 stehen.

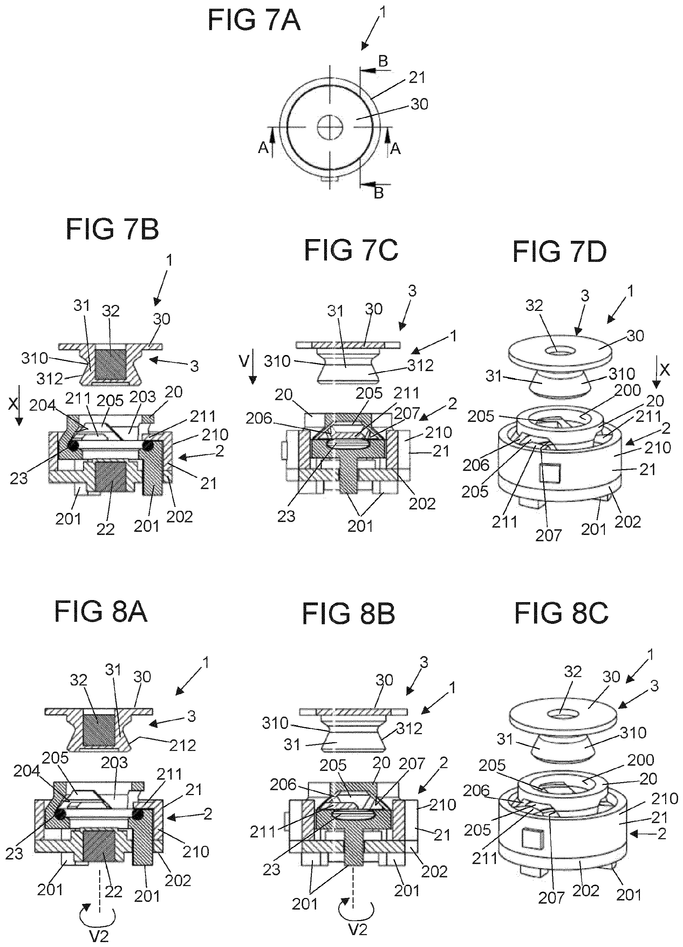

Wird das Verstellelement 21 in die Verstellrichtung V1 an dem Körper 20 nach unten verschoben, so wird das Verriegelungselement 23 über die Verstellelemente 211 mitgenommen und in die Verstellrichtung V1 nach unten gedrückt, sodass das Verriegelungselement 23 an der äußeren Schrägfläche 312 des Eingriffselements 31 entlang gleitet und dadurch - unter radialer Aufweitung des Verriegelungselements 23 - außer Eingriff von dem Eingriffsabschnitt 310 an dem Eingriffselement 31 gebracht wird. Die Verriegelung zwischen den Verschlussteilen 2, 3 wird somit aufgehoben, sodass die Verschlussteile 2, 3 entgegen der Schließrichtung X voneinander abgenommen werden können, wie dies in Fig. 7A-7D dargestellt ist.

Zusätzlich zu der in Fig. 5B-5D dargestellten linearen Verstellbewegung entlang der Verstellrichtung V1 kann das Verstellteil 21 auch entlang einer rotatorischen Verstellrichtung V2 um die Schließrichtung X an dem Körper 20 verdreht werden, wie dies in Fig. 6A-6C dargestellt ist. Dadurch gleiten die Verstellelemente 211 des Verstellteils 21 an durch schräge Kantenabschnitte gebildeten Kraftumlenkabschnitten 206, 207 am Körper 20 des Verschlussteils 2 entlang, sodass die rotatorische Drehbewegung des Verstellteils 21 in eine lineare Verstellbewegung des Verstellteils 21 in die Verstellrichtung V1 und somit in die Schließrichtung X umgesetzt wird. Dabei wird wiederum durch Eingriff der Verstellelemente 211 in die zugeordneten Eingriffsöffnungen 205 das Verriegelungselement 23 in die Verstellrichtung V1 mitgenommen, sodass die Verschlussvorrichtung 1 entriegelt wird.

Ist die Verschlussvorrichtung 1 entriegelt worden, so können die Verschlussteile 2, 3 voneinander abgenommen werden, wie dies in Fig. 8A-8C dargestellt ist.

Das Verstellteil 21 kann somit in unterschiedliche Verstellrichtungen V1, V2 durch einen Nutzer zum Ausführen unterschiedlicher Öffnungsbewegungen betätigt werden. Das Verstellteil 21 kann durch den Nutzer unmittelbar in die lineare Verstellrichtung V1 an dem Körper 20 verschoben werden. Alternativ kann das Verstellteil 21 durch den Nutzer rotatorisch entlang der Verstellrichtung V2 verdreht werden, wobei die rotatorische Bewegung umgesetzt wird in eine überlagernde lineare Bewegung des Verstellteils 21 in die Verstellrichtung V1. Jeweils wird das Verriegelungselement 23 in die Verstellrichtung V1 mitgenommen und somit an dem Eingriffselement 31 verschoben, sodass die Verschlussvorrichtung 1 entriegelt wird und die Verschlussteile 2, 3 somit voneinander abgenommen werden können.

Die rotatorische Bewegung des Verstellteils 21 ist in die Verstellrichtung V2 und genauso auch entgegen der Verstellrichtung V2 möglich. Abhängig von der Orientierung der rotatorischen Bewegung wirken die Eingriffselemente 211 auf den einen Kraftumlenkabschnitt 206 oder den anderen Kraftumlenkabschnitt 207 an der jeweils zugeordneten Eingriffsöffnung 205 ein, sodass jeweils eine Kraft- und Bewegungsumlenkung zum Verstellen des Verstellteils 2 (auch) in die Verstellrichtung V1 erfolgt.

Bei einem Verstellen des Verstellteils 21 in die Verstellrichtung V1 wird das Gehäuseteil 202 mitgenommen, sodass die Magneteinrichtung 22 an dem Körper 20 in die Verstellrichtung V1 verschoben wird, wie dies aus Fig. 5B-5D und 6A-6C ersichtlich ist. Dadurch werden die Magneteinrichtungen 22, 32 voneinander entfernt und die magnetische Anziehung somit abgeschwächt, sodass die Verschlussteile 2, 3 nach Aufheben der Verriegelung in einfacher Weise voneinander abgenommen werden können.

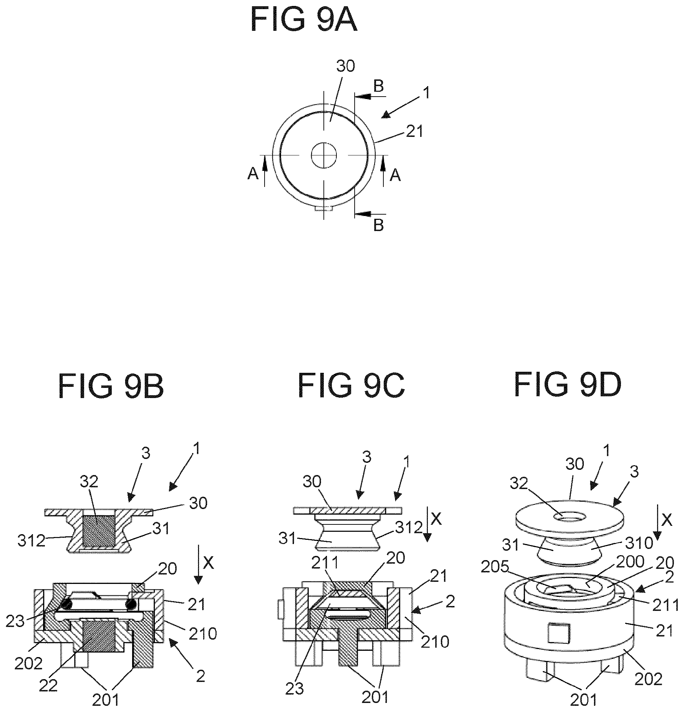

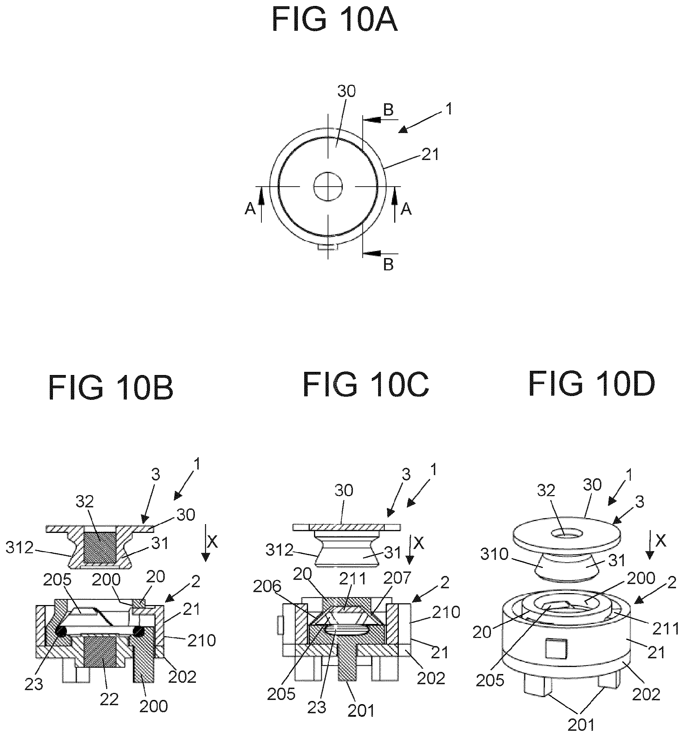

In der geöffneten Stellung der Verschlussvorrichtung 1 kann das Verriegelungselement 23 die in Fig. 9B-9D dargestellte, in der Aufnahmeöffnung 203 in Richtung der Eingriffsöffnung 200 verschobene, obere Stellung oder die in Fig. 10B-10D dargestellte, radial geweitete, untere Stellung einnehmen. Das Verriegelungselement 23 kann sich zum Beispiel aufgrund seiner Eigenelastizität selbsttätig in die jeweilige Stellung bewegen. Zudem kann das Verriegelungselement 23 bei magnetischer Ausbildung zum Beispiel durch Wechselwirkung mit der Magneteinrichtung 22 in die eine oder die andere Stellung belastet sein.

Unabhängig davon, welche Stellung das Verriegelungselement 23 in der Öffnungsstellung einnimmt, kann die Verschlussvorrichtung 1 durch Ansetzen der Verschlussteile 2, 3 entlang der Schließrichtung X aneinander wieder geschlossen werden. Nimmt das Verriegelungselement 23 die Stellung gemäß Fig. 9B-9D ein, so drängt das Eingriffselement 31 bei Ansetzen der Verschlussteile 2, 3 aneinander das Verriegelungselement 23 beiseite, bis das Verriegelungselement 23 verriegelnd in Eingriff mit dem Eingriffselement 31 gelangen kann. Nimmt das Verriegelungselement 23 demgegenüber in der Öffnungsstellung die Stellung gemäß Fig. 10B-10D ein, so gelangt das Verriegelungselement 23 nach Ansetzen der Verschlussteile 2, 3 aneinander, insbesondere nach Einsetzen des Eingriffselements 23 in die Eingriffsöffnung 200, in die Stellung gemäß Fig. 3B, insbesondere aufgrund magnetischer Wechselwirkung zwischen dem Verriegelungselement 23 und der Magneteinrichtung 32 am zweiten Verschlussteil 3.

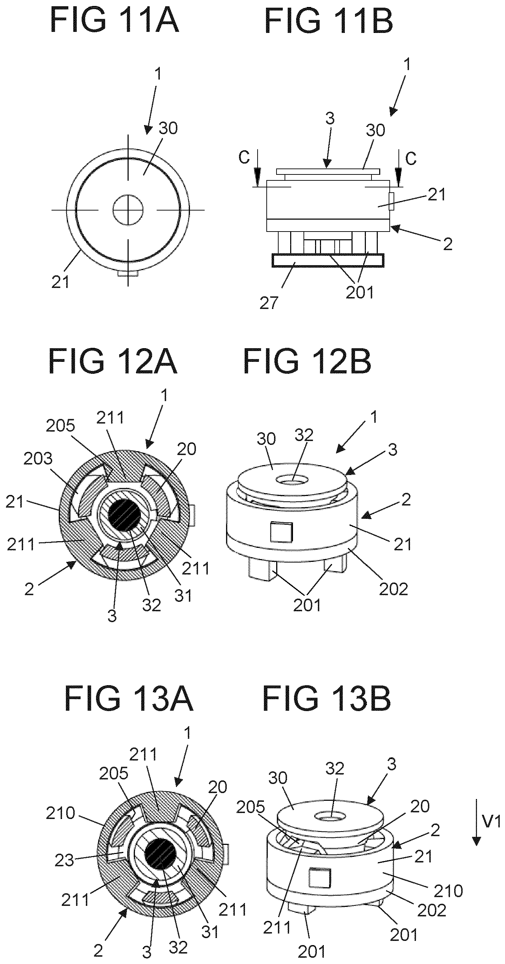

Fig. 12A, 12B und 13A, 13B zeigen die Verschlussvorrichtung 1 beim linearen Verstellen des Verstellteils 21 am Körper 20. Ersichtlich ist insbesondere, dass die Verstellelemente 211 radial von dem Verstellkörper 210 nach innen ragen und dadurch bei einem Verstellen des Verstellteils 21 das Verriegelungselement 23 in die Verstellrichtung V1 mitgenommen wird.

Fig. 14A, 14B und 15A, 15B zeigen demgegenüber die Verschlussvorrichtung 1 beim rotatorischen Verstellen des Verstellteils 21. Ersichtlich ist, dass die Verstellelemente 211 beim rotatorischen Verdrehen auf seitliche, schrägen Kanten 206 der Eingriffsöffnungen 205 auflaufen und dadurch das Verstellteil 21 unter Kraftumlenkung in die Verstellrichtung V1 an dem Körper 20 verstellt wird, wiederum unter Mitnahme des Verriegelungselements 23 über die Verstellelemente 211.

Die Verstellbarkeit des Gehäuseteils 202 mit der daran angeordneten Magneteinrichtung 22 bewirkt ein Zurückstellen des Verstellteils 21 in eine einer Ausgangsstellung entsprechende, erste Stellung, wenn die Verschlussrichtung 1 erneut geschlossen wird. So ziehen sich die Magneteinrichtung 22, 32 beim Schließen der Verschlussvorrichtung 1 magnetisch an, sodass das Gehäuseteil 202 durch die magnetische Wechselwirkung der Magneteinrichtungen 22, 32 hin zu dem Körper 20 verstellt und somit an den Führungszapfen 201 in Richtung der in Fig. 3A-3D dargestellten Stellung bewegt wird. Dadurch wird auch das Verstellteil 21 zurückgestellt und nimmt die zum Beispiel aus Fig. 3B ersichtliche (erste) Stellung an dem Körper 20 ein. Ein Nutzer kann somit zum erneuten Öffnen der Verschlussvorrichtung 1 an dem Verstellteil 21 angreifen und dieses betätigen.

Das Gehäuseteil 202 mit der daran angeordneten, ersten Magneteinrichtung 22 des ersten Verschlussteils 2 kann in der Öffnungsstellung in eine verschobene Stellung relativ zu dem Körper 20 des ersten Verschlussteils vorgespannt sein.

Wie dies zum Beispiel aus Fig. 11B ersichtlich ist, nimmt das Gehäuseteil 202 in der Schließstellung eine definierte Grundstellung relativ zu dem Körper 20 ein und hält dadurch das Verstellteil 21 in der ersten Stellung an dem Körper 20, aufgrund der magnetischen Wechselwirkung zwischen den Magneteinrichtungen 22, 32. Wird die Verschlussvorrichtung 1 geöffnet, so wird das Gehäuseteil 202 gemeinsam mit dem Verstellteil 21 in die Schließrichtung X an dem Körper 20 verstellt, wobei in der Öffnungsstellung das Gehäuseteil 202 in der so eingenommenen, verschobenen Stellung gehalten werden kann, beispielsweise indem eine (schematisch in Fig. 11B eingezeichnete) Vorspanneinrichtung 27, zum Beispiel in Form eines magnetischen Plättchens, fest mit den Führungszapfen 201 verbunden ist und magnetisch mit der ersten Magneteinrichtung 22 zusammenwirkt. Das Gehäuseteil 202 mit der daran angeordneten Magneteinrichtung 22 wird somit in der Öffnungsstellung der Verschlussvorrichtung 1 in der verschobenen Stellung gemäß Fig. 13B bzw. 15B gehalten.

Dies kann dazu verwendet werden, eine Anzeigefunktion zur Verfügung zu stellen, beispielsweise indem an dem Gehäuseteil 202 eine geeignete Markierung, zum Beispiel eine farbliche Markierung vorhanden ist oder indem ein Signalgeber, zum Beispiel ein elektrischer Signalgeber wie ein Reed-Switch, vorgesehen wird.

Wird die Verschlussvorrichtung 1 wieder geschlossen, so stellt sich das Gehäuseteil 202 und somit auch das Verstellteil 21 aufgrund der magnetischen Wechselwirkung zwischen den Magneteinrichtungen 22, 32 in die in Fig. 11B dargestellte Schließstellung zurück.

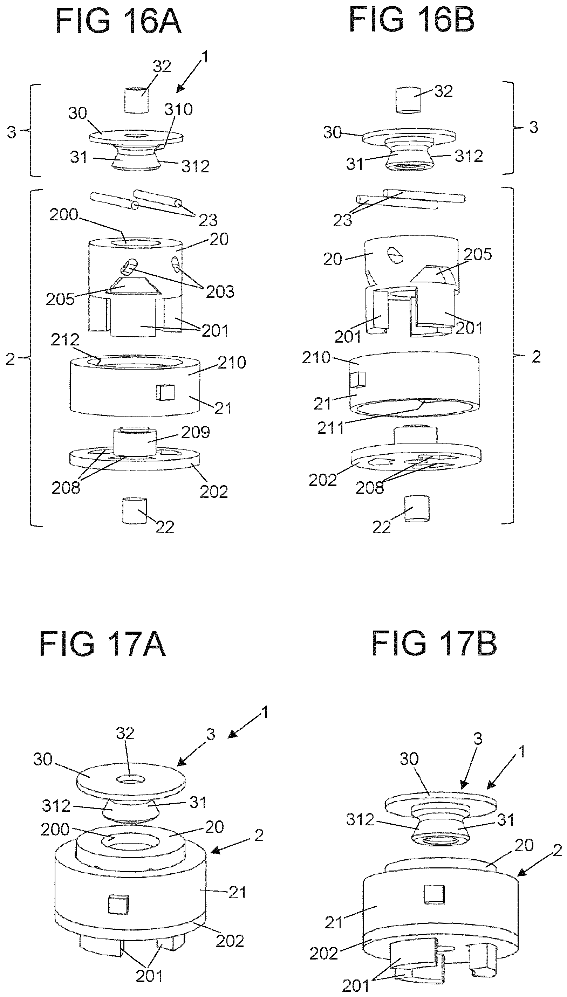

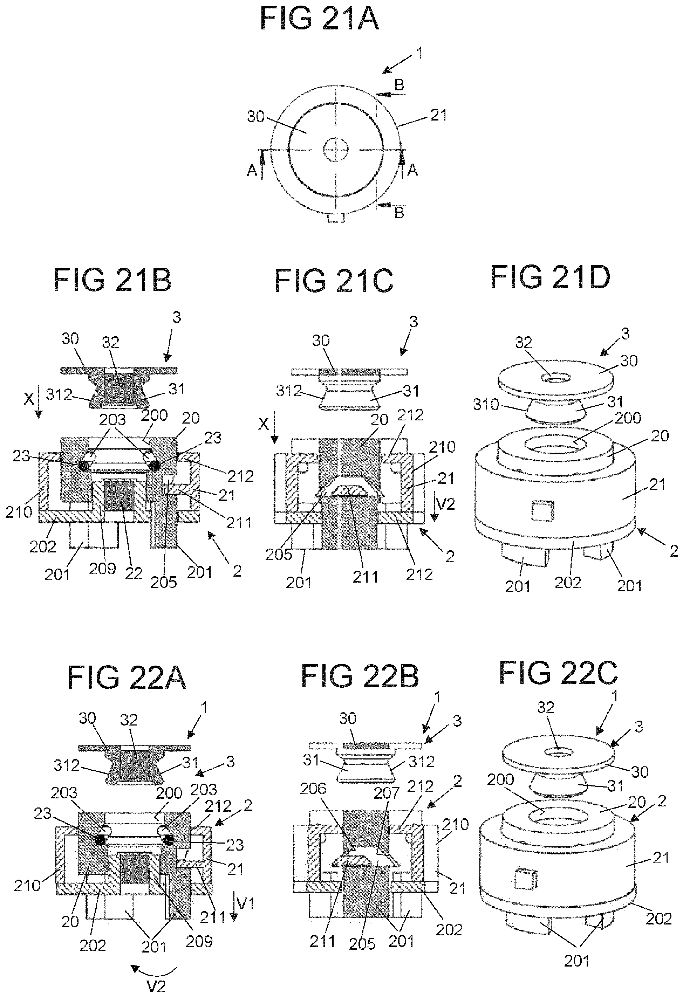

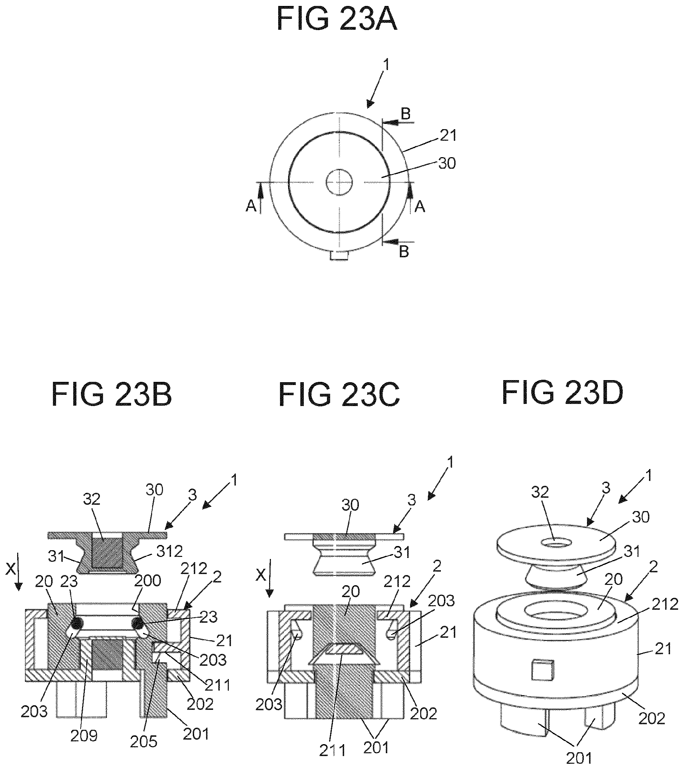

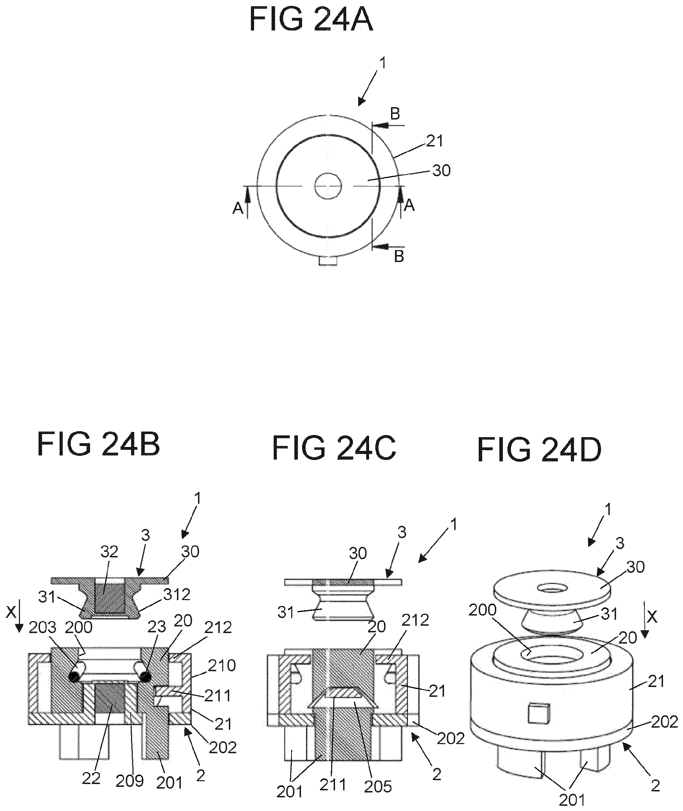

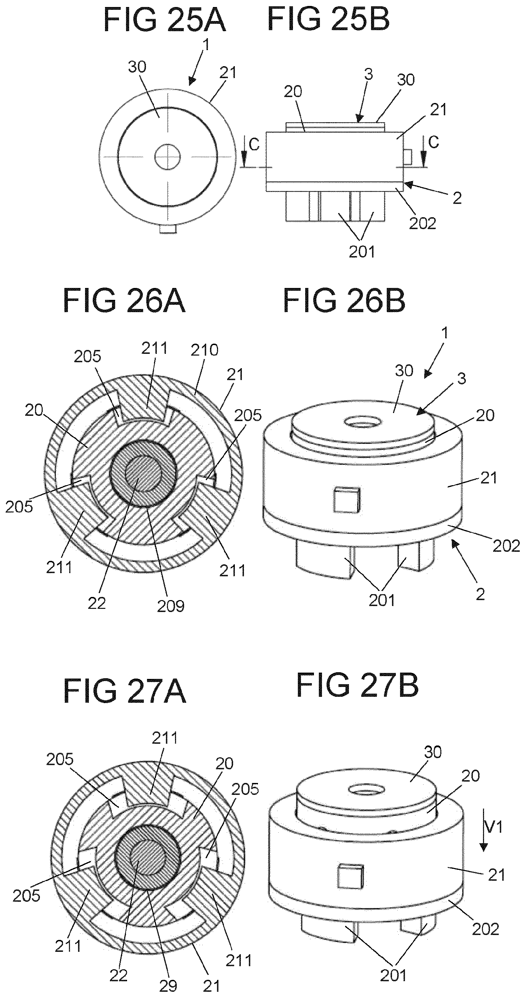

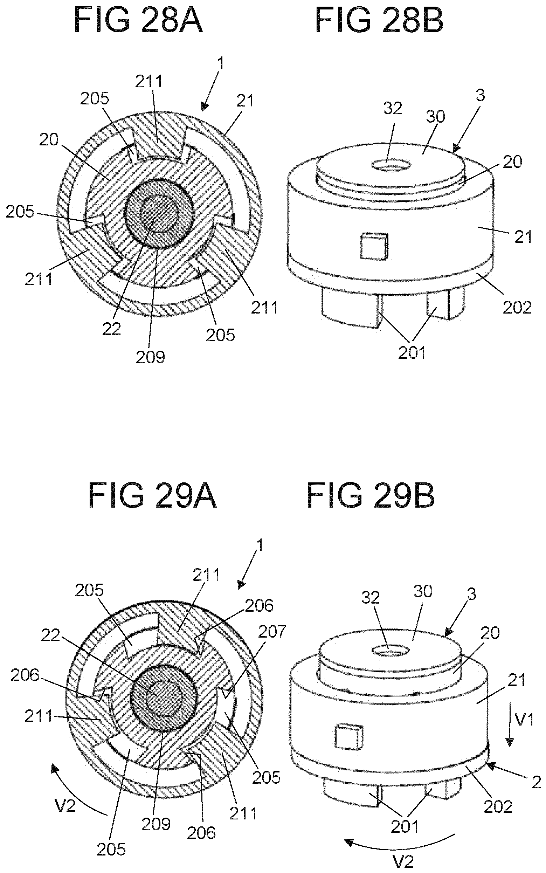

Fig. 16A,16B bis 29A, 29B zeigen ein weiteres Ausführungsbeispiel einer Verschlussvorrichtung 1, das funktional weitestgehend identisch zu dem Ausführungsbeispiel gemäß Fig. 1A, 1B bis 15A, 15B ausgestaltet ist, sodass nachfolgend insbesondere die Unterschiede zu dem vorangehend beschriebenen Ausführungsbeispiel erläutert werden sollen.

Bei dem Ausführungsbeispiel gemäß Fig. 16A, 16B bis 29A, 29B sind im Unterschied zu dem ringförmigen Verriegelungselement 23 des Ausführungsbeispiels gemäß Fig. 1A, 1B bis 15A, 15B zwei Verriegelungselemente 23 an Aufnahmeöffnungen 203 des Körpers 20 des ersten Verschlussteils 2 aufgenommen, die jeweils stabförmig ausgebildet und linear entlang einer zur Schließrichtung X senkrechten Richtung erstreckt sind.

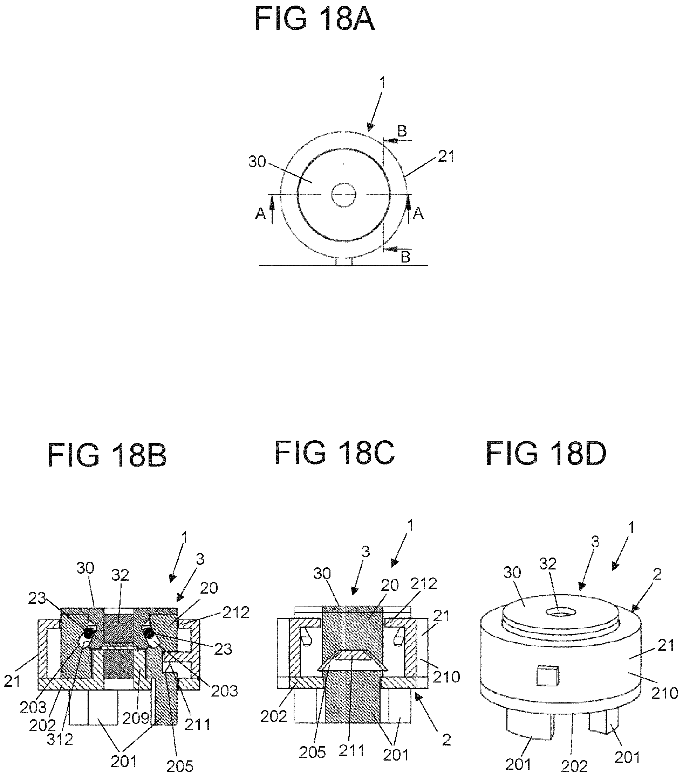

Wie dies aus Fig. 18B ersichtlich ist, nehmen die Verriegelungselemente 23 in der Schließstellung das Eingriffselement 31 des zweiten Verschlussteils 3 zwischen sich auf und liegen dabei zwischen außenseitigen Schrägflächen 204 der Aufnahmeöffnungen 203 und der umlaufenden Schrägfläche 312 des Eingriffsabschnitts 310 des Eingriffselements 31 ein, sodass die Verschlussteile 2, 3 miteinander verriegelt sind.

Die Verriegelungselemente 23 sind jeweils magnetisch ausgebildet und werden in der Schließstellung magnetisch durch die Magneteinrichtung 32 angezogen, sodass die Verriegelungselemente 23 in Richtung ihrer Verriegelungsstellung magnetisch gespannt sind.

Die Betätigung der Verschlussvorrichtung 1 zum Öffnen erfolgt analog wie dies vorangehend für das Ausführungsbeispiel nach Fig. 1A, 1B bis 15A, 15B beschrieben worden ist.

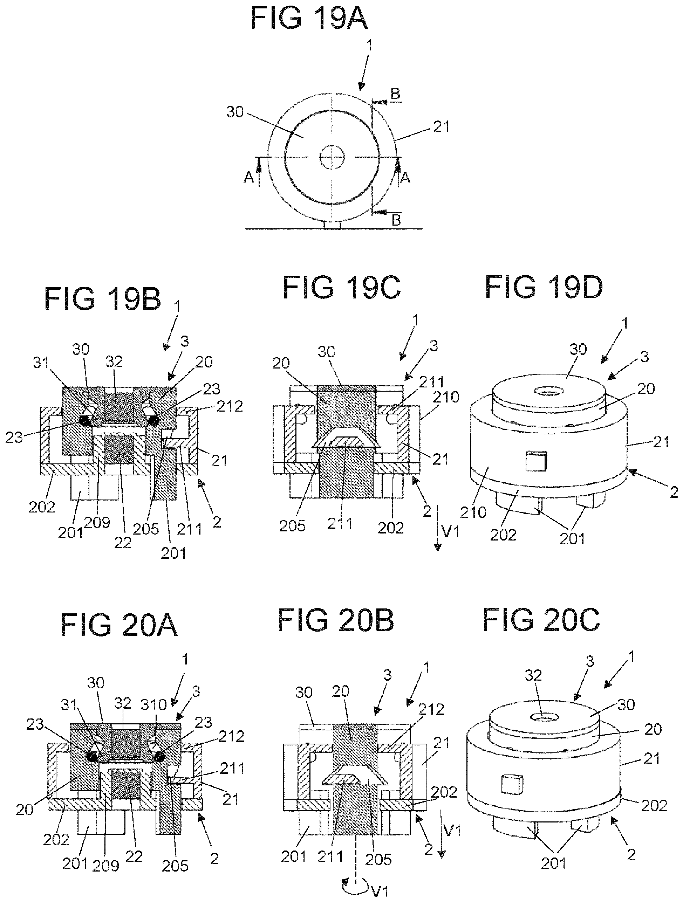

Insbesondere kann das Verstellteil 21 linear entlang einer Verstellrichtung V1 an dem Körper 20 des Verstellteils 2 verschoben werden, um dadurch die Verriegelungselemente 23 in die Verstellrichtung V1 mitzunehmen und in den zugeordneten, schräg erstreckten Aufnahmeöffnungen 203 radial nach außen zu verstellen (siehe Fig. 19B-19D sowie Fig. 26A, 26B und Fig. 27A, 27B). Zudem kann das Verstellteil 21 rotatorisch um die Schließrichtung entlang einer Drehrichtung V1 an dem Körper 20 verdreht werden, wobei durch Eingriff der Verstellelemente 211 in die Eingriffsöffnungen 205 am Körper 20 eine Kraft- und Bewegungsumlenkung erfolgt und das Verstellteil 21 somit (auch) in die Verstellrichtung V1 linear an dem Körper 20 verschoben wird, wiederum unter Mitnahme der Verriegelungselemente 23 (siehe Fig. 20A-20C sowie Fig. 28A, 28B und Fig. 29A, 29B).

Abgesehen von der Verwendung der zwei stabförmigen Verriegelungselemente 23 ist das Ausführungsbeispiel funktional identisch dem vorangehend beschriebenen Ausführungsbeispiel, sodass ergänzend auf die vorangehenden Erläuterungen verwiesen werden soll.

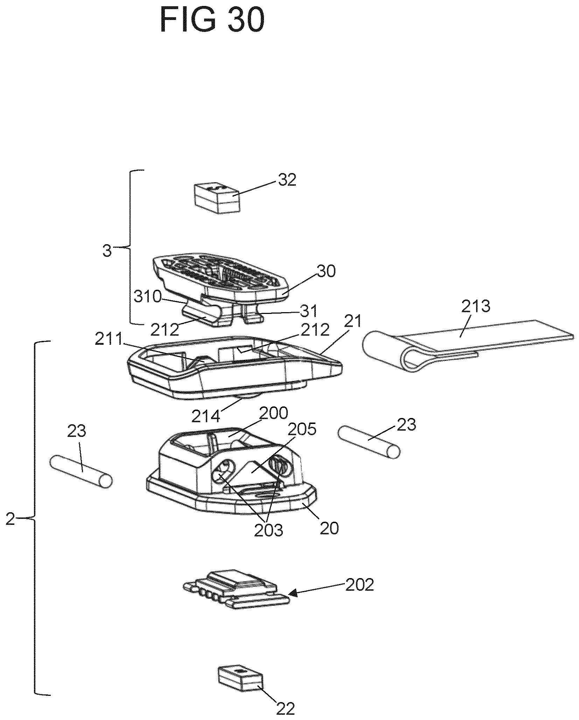

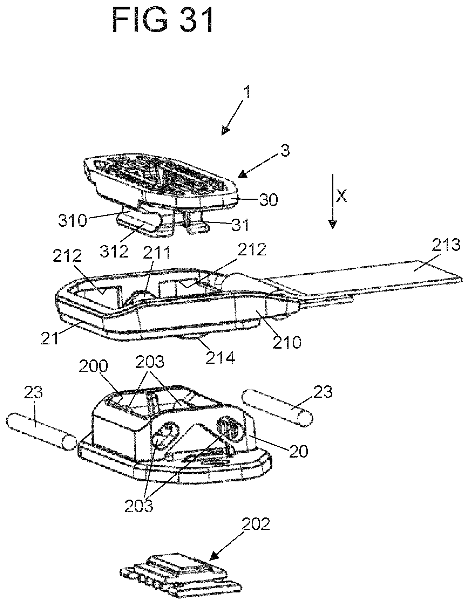

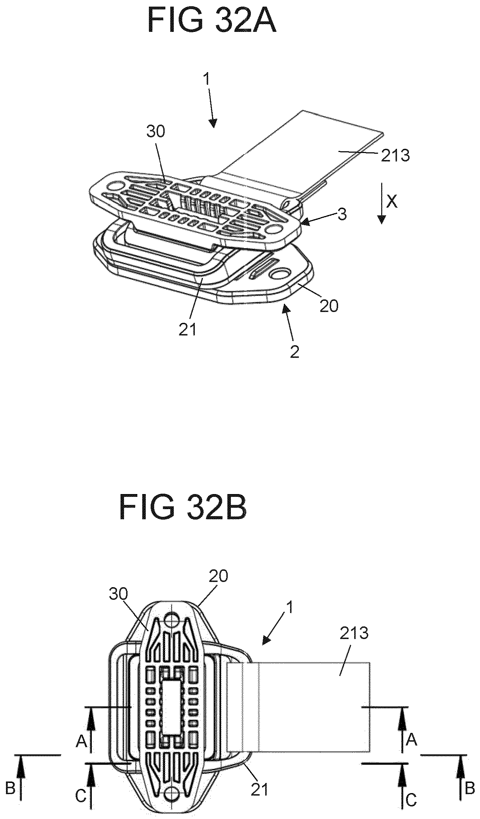

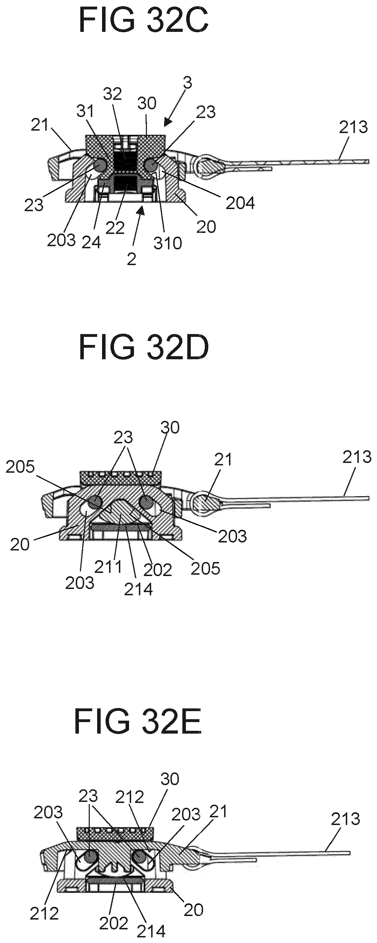

Bei einem weiteren, in Fig. 30 bis 35A-35E dargestellten Ausführungsbeispiel sind zwei Verschlussteile 2, 3 entlang einer Schließrichtung X aneinander ansetzbar. Ein erstes Verschlussteil 2 weist einen Körper 20 auf, der eine Eingriffsöffnung 200 ausbildet, in die das zweite Verschlussteil 3 mit einem an einer Basis 30 geformten Eingriffselement 31 eingesetzt werden kann, sodass in einer Schließstellung (Fig. 32A-32E) die Verschlussteile 2, 3 miteinander verriegelt sind.

In der Schließstellung greifen zwei in Aufnahmeöffnungen 203 an dem Körper 20 des ersten Verschlussteils 2 aufgenommene, stabförmige Verriegelungselemente 23 in Eingriffsabschnitte 310 beidseits des Eingriffselements 31 ein, sodass die Verriegelungselemente 23 zwischen Schrägflächen 312 an dem Eingriffselement 31 und Schrägflächen 204 außenseitig der Aufnahmeöffnungen 203 zu liegen kommen und die Verschlussteile 2, 3 somit zueinander verriegeln, wie dies aus Fig. 32C ersichtlich ist. Die Verriegelungselemente 23 sind magnetisch ausgebildet und wirken magnetisch mit der Magneteinrichtung 32 des zweiten Verschlussteils 3 zusammen, sodass die Verriegelungselemente 23 in die verriegelte Stellung magnetisch gespannt sind.

An dem Körper 20 des ersten Verschlussteils 2 ist ein Gehäuseteil 202 verstellbar angeordnet, dass die Magneteinrichtung 22 des ersten Verschlussteils 2 trägt.

An dem Körper 20 des ersten Verschlussteils 2 ist zudem ein Verstellteil 21 angeordnet, das einen rechteckigen, rahmenförmigen Verstellkörper 210 aufweist, der den Körper 20 umfänglich umgibt.

Innenseitig des Verstellkörpers 210 sind Verstellelemente 212 in Form von Kanten an nach innen vorspringenden Abschnitten geformt, die bei einem Verstellen des Verstellteils 21 an dem Körper 20 auf von dem Körper 20 nach außen vorstehende Enden der Verriegelungselemente 23 einwirken und dadurch die Verriegelungselemente 23 in den Aufnahmeöffnungen 203 des Körpers 20 verstellen.

Innenseitig des rahmenförmigen Verstellkörpers 210 sind zudem Verstellelemente 211 geformt, die in Eingriffsöffnungen 205 an dem Körper 20 eingreifen und eine Wirkverbindung zwischen dem Verstellteil 21 und dem Körper 20 des Verschlussteils 2 herstellen.

Die Verstellelemente 211 weisen eine näherungsweise dreieckige Form auf und liegen in den ebenfalls näherungsweise dreieckförmigen Eingriffsöffnungen 205 mit Spiel ein.

Zum Schließen der Verschlussvorrichtung 1 werden die Verschlussteile 2, 3 entlang der Schließrichtung X aneinander angesetzt, sodass das Eingriffselement 31 in die Eingriffsöffnung 200 am Körper 20 des Verschlussteils 2 eingreift und die Verriegelung über die Verriegelungselemente 23 hergestellt wird. In der Schließstellung (Fig. 32A-32E) sind die Verschlussteile 2, 3 somit mechanisch fest miteinander verbunden.

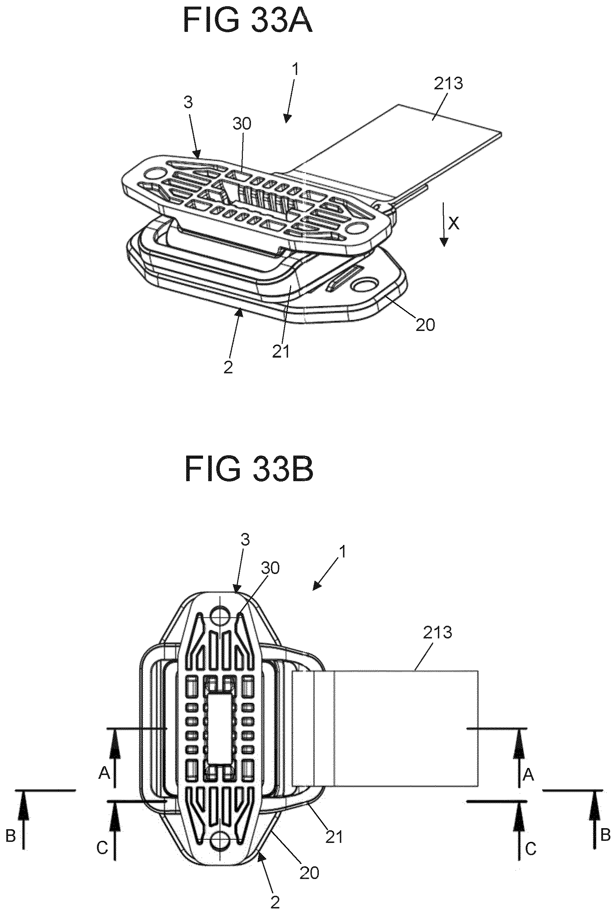

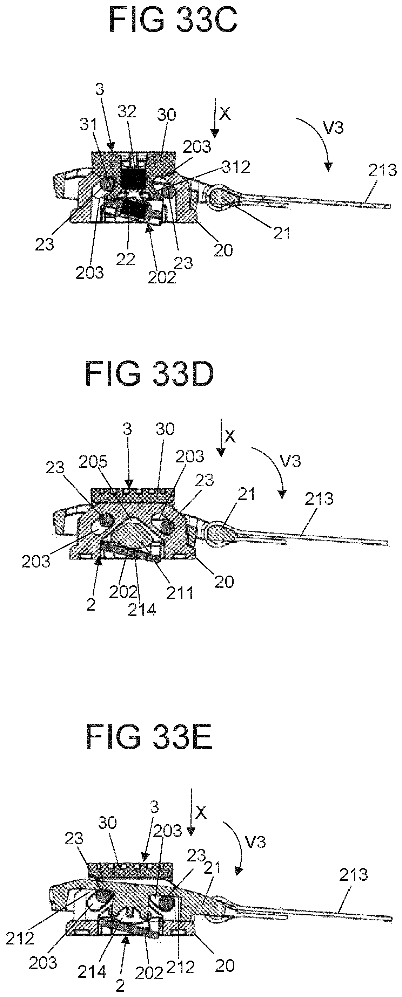

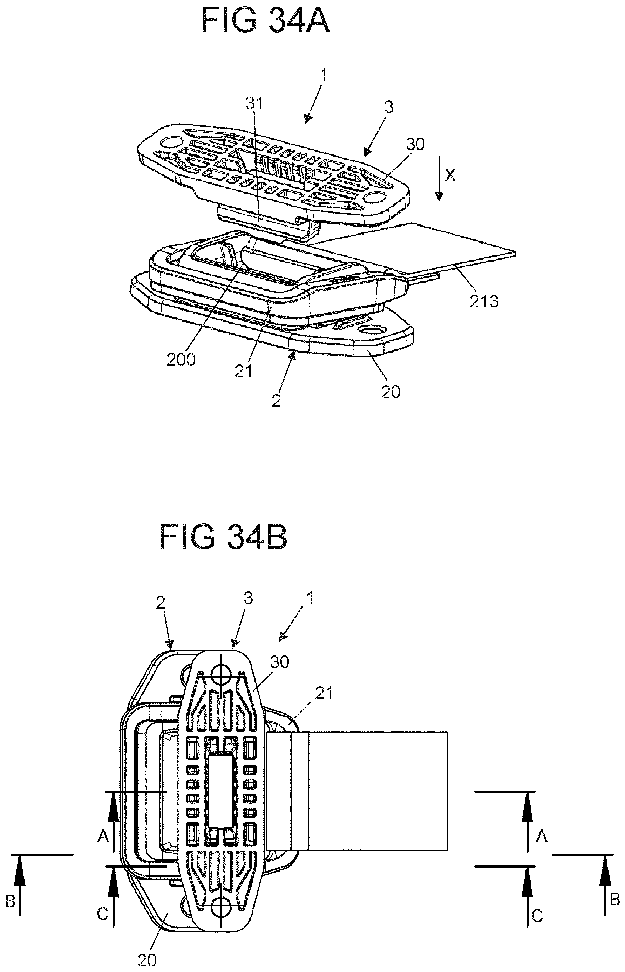

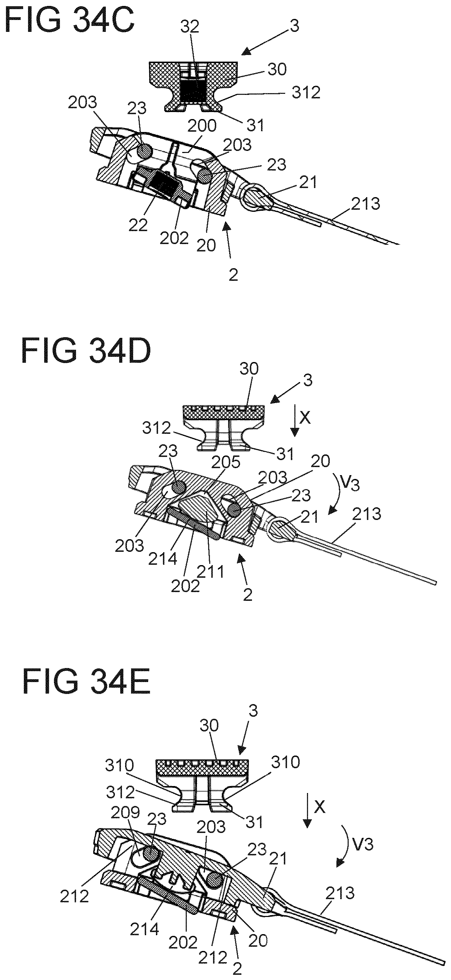

Zum Öffnen der Verschlussvorrichtung 1 kann ein Nutzer zum Beispiel über eine Lasche 213 an dem Verstellteil 21 angreifen und dieses zum Beispiel entlang einer Verstellrichtung V3 relativ zu dem Körper 20 verkippen, wie dies aus Fig. 33A-33E ersichtlich ist. Dadurch wirkt das Verstellteil 21 auf zumindest eines der Verriegelungselemente 23 ein und entriegelt dieses, was dazu führt, dass das Eingriffselement 31 nicht mehr in der Eingriffsöffnung 200 verriegelnd festgelegt ist und somit aus der Eingriffsöffnung 200 entnommen werden kann, wie dies aus Fig. 34A-34E ersichtlich ist. Die Verschlussvorrichtung 1 kann somit geöffnet werden.

Wie dies aus Fig. 33C-33E ersichtlich ist, wird bei dem Verkippen des Verstellteils 21 das Gehäuseteil 202 mitgenommen und somit auch die Magneteinrichtung 22 des ersten Verschlussteils 2 an dem Körper 20 verstellt, sodass die magnetische Anziehung zwischen den Verschlussteilen 2, 3 reduziert wird und die Verschlussteile 2, 3 somit einfach und komfortabel voneinander abgenommen werden können.

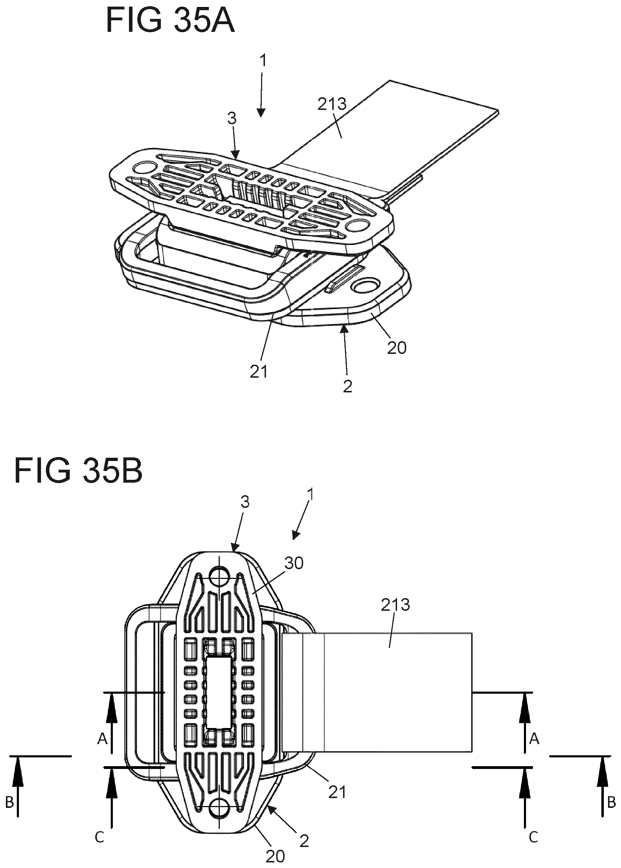

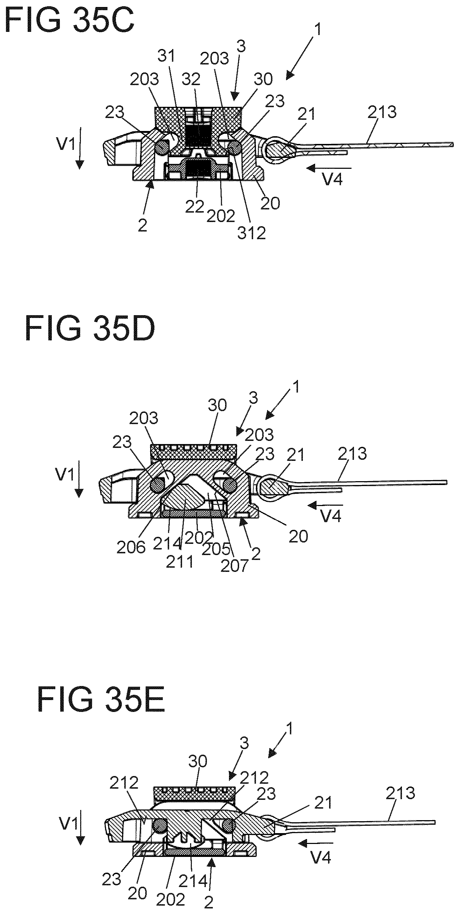

Zusätzlich zu der Kippbewegung des Verstellteils 21 ist auch eine lineare Bewegung des Verstellteils 21 in eine lineare Verstellrichtung V4 möglich, wie dies aus Fig. 35A-35E ersichtlich ist. Zum Beispiel bei Drücken (an dem Verstellteil 21) oder Ziehen (an der Lasche 213) an dem Verstellteil 21 entlang der zur Schließrichtung X senkrechten Richtung V4 (also in oder entgegen der Richtung V4) gleiten die Verstellelemente 211 an Kraftumlenkabschnitten 206, 207 innenseitig der Eingriffsöffnungen 205 des Körpers 20 entlang, sodass eine Kraft- und Bewegungsumlenkung erfolgt und das Verstellteil 21 (auch) in eine Verstellrichtung V1 entlang der Schließrichtung X an dem Körper 20 verstellt wird. Dadurch werden die Verriegelungselemente 23 in die Verstellrichtung V1 an dem Körper 20 bewegt und somit entriegelt, wie dies aus Fig. 35C und 35D ersichtlich ist.

Zudem kann ein Nutzer das Verstellteil 21 auch in die Verstellrichtung V1 und somit in die Schließrichtung X nach unten drücken, wodurch die Verriegelungselemente 23 ebenfalls mitgenommen und in die Verstellrichtung V1 an dem Körper 20 zum Entriegeln verstellt werden.

Die Verschlussrichtung 1 kann somit auf ganz unterschiedliche Weise mit unterschiedlichen Öffnungsbewegungen des Verstellteils 21 geöffnet werden.

Insbesondere kann das Verstellteil 21 zum Öffnen verkippt, senkrecht zur Schließrichtung X bewegt oder in die Schließrichtung X an dem Körper 20 verschoben werden. Es ergibt sich, wie auch bei den vorangehend beschriebenen Ausführungsbeispielen, eine komfortable, intuitive Bedienung für einen Nutzer.

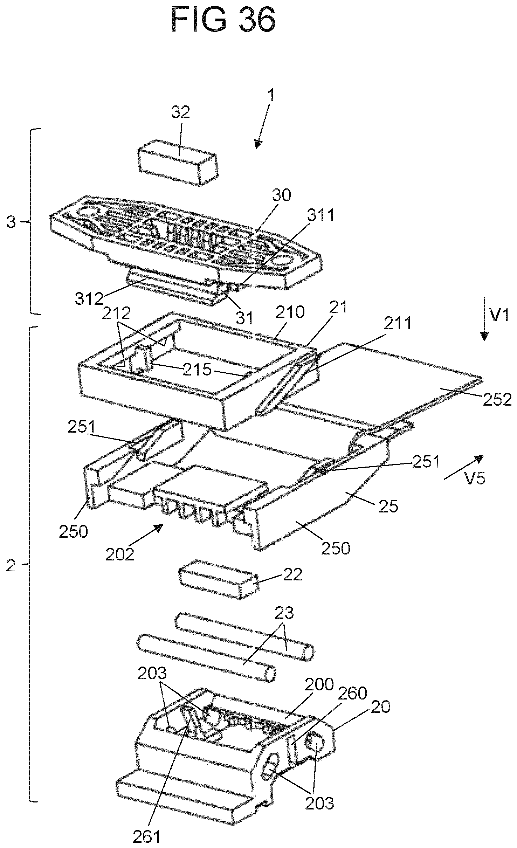

Bei einem weiteren, in Fig. 36 bis 39A-39E dargestellten Ausführungsbeispiel weist ein erstes Verschlussteil 2 ein Verstellteil 21 mit einem rechteckigen, rahmenförmigen Verstellkörper 210 auf, der linear entlang einer (entlang der Schließrichtung X weisenden) Verstellrichtung V1 an einem Körper 20 des Verschlussteils 2 geführt ist. Innenseitig des Verstellkörpers 210 sind Führungselemente 215 geformt, die in zugeordnete Führungsnuten 260 an dem Körper 20 eingreifen, sodass das Verstellteil 21 ausschließlich entlang der Verstellrichtung V1 an dem Körper 20 verstellbar ist.

Bei dem dargestellten Ausführungsbeispiel sind wiederum Verriegelungselemente 23 in Form von linear erstreckten Stäben an Aufnahmeöffnungen 203 des Körpers 20 aufgenommen. In einer Schließstellung verriegeln die Verriegelungselemente 23 mit einem Eingriffselement 31 an einer Basis eines zweiten Verschlussteils 3, sodass die Verschlussteile 2, 3 mechanisch belastbar aneinander gehalten sind.

Mit Blick auf die Verriegelung in der Schließstellung soll auch auf die Erläuterungen zu den vorangehend beschriebenen Ausführungsbeispielen verwiesen werden, die funktional identisch auch für das Ausführungsbeispiel gemäß Fig. 36 bis 39A-39E gelten.

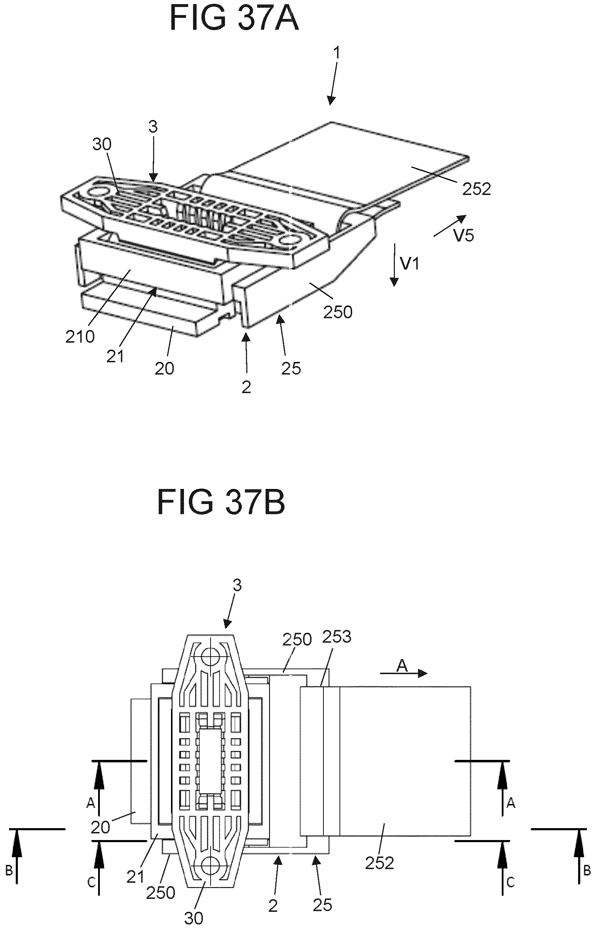

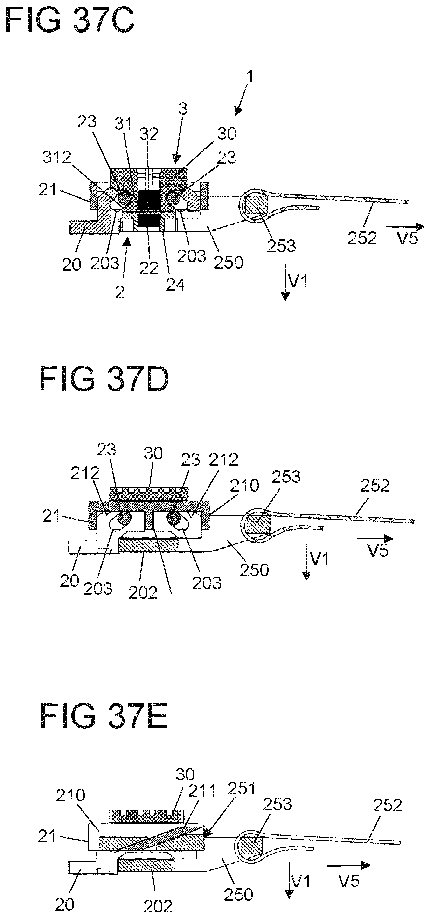

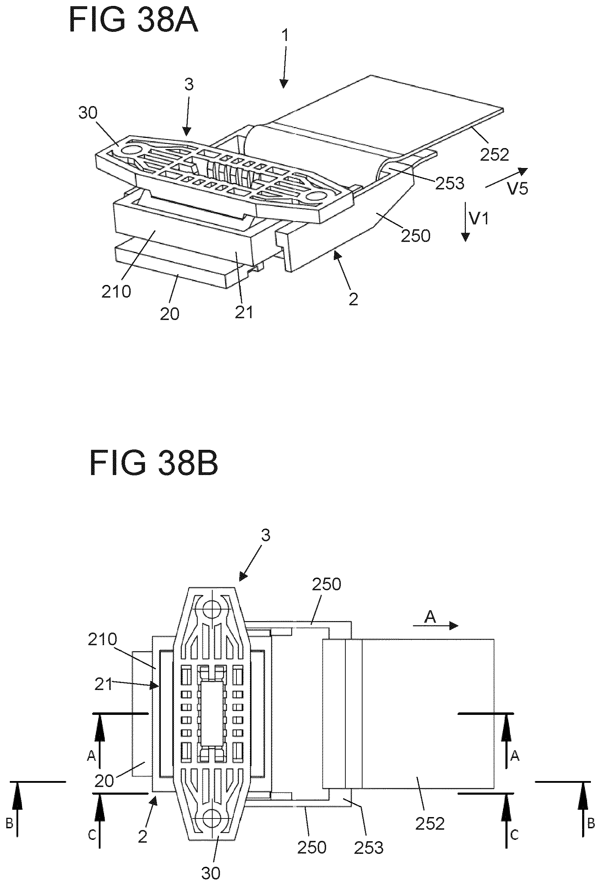

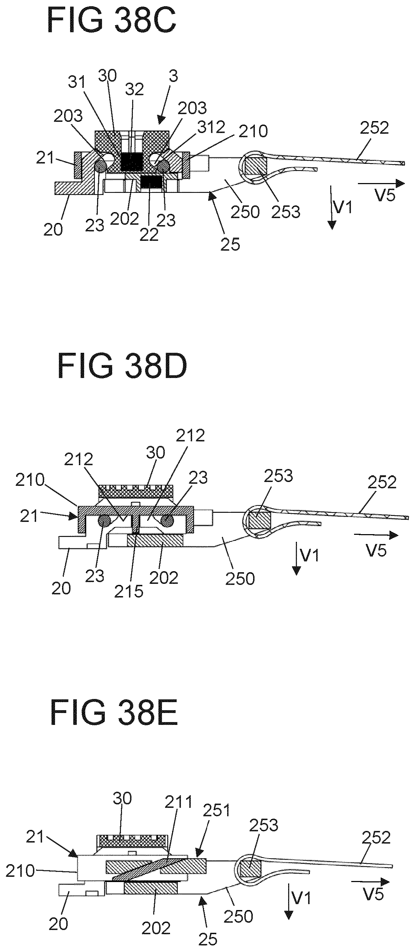

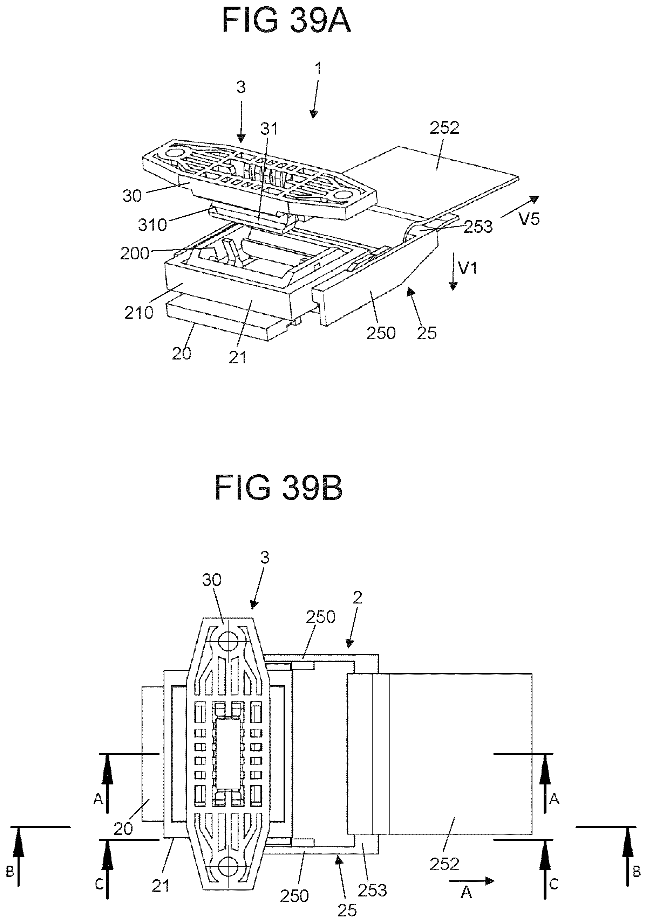

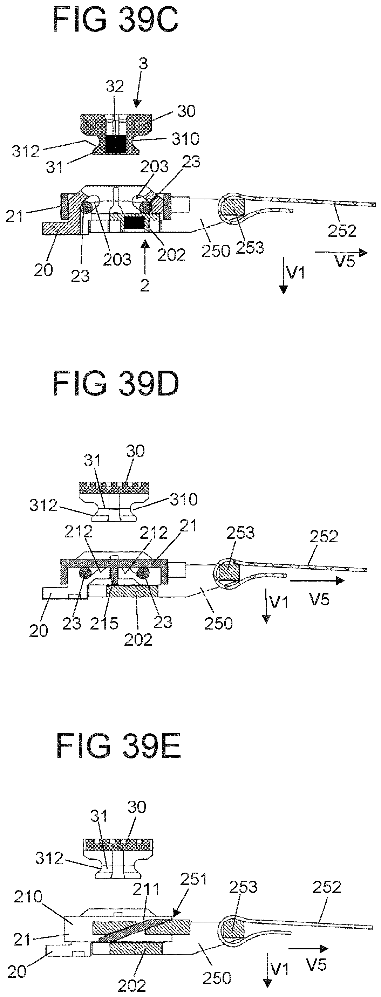

Bei dem Ausführungsbeispiel gemäß Fig. 36 bis 39A-39E ist eine Verstellbaugruppe durch das Verstellteil 21 und zusätzlich durch ein Betätigungsteil 25 gebildet, das mit dem Verstellteil 21 wirkverbunden ist. Während das Verstellteil 21 ausschließlich entlang der entlang der Schließrichtung X gerichteten Verstellrichtung V1 an dem Körper 20 linear bewegbar ist, um auf diese Weise die Verriegelungselemente 23 zwischen der Verriegelungsstellung (Fig. 37A-37E) und einer entriegelten Stellung (Fig. 38A-38E und Fig. 39A-39E) zu verstellen, ist das Betätigungsteil 25 der Verstellbaugruppe mit unterschiedlichen Öffnungsbewegungen relativ zu dem Körper 20 des Verschlussteils 2 verstellbar, wobei eine jede Bewegung des Betätigungsteils 25 zu einem Verstellen des Verstellteils 21 an dem Körper 20 und somit zu einem Öffnen der Verschlussvorrichtung 1 führt.

Wie dies zum Beispiel aus der Explosionsansicht gemäß Fig. 36 ersichtlich ist, weist das Betätigungsteil 25 Schenkel 250 auf, die über einen Steg 253 miteinander verbunden sind. Das Betätigungsteil 25 ist fest mit einem Gehäuseteil 202 verbunden, an dem die Magneteinrichtung 22 des ersten Verschlussteils 2 angeordnet ist, sodass die Magneteinrichtung 22 bei einem Verstellen des Betätigungsteils 25 gemeinsam mit dem Betätigungsteil 25 verstellt wird.

Innenseitig der Schenkel 250 des Betätigungsteils 25 sind Kraftumlenkabschnitte 251 geformt, die mit Verstellelementen 211 in Form von schrägen Stegen außenseitig des rahmenförmigen Verstellkörpers 210 des Verstellteils 21 in Eingriff stehen. Die Kraftumlenkabschnitte 251 weisen jeweils Schrägflächen nach Art von schrägen Ebenen auf, an denen die Verstellelemente 211 des Verstellteils 21 bei einem Verstellen des Betätigungsteil 22 gleiten und an denen somit eine Kraft- und Bewegungsumlenkung bei Bewegung des Betätigungsteils 25 erfolgt.

Das Betätigungsteil 25 kann unter Anwendung unterschiedlicher Öffnungsbewegungen relativ zu dem Körper 20 verstellt werden, um auf diese Weise das Verstellteil 21 in die Verstellrichtung V1 an dem Körper 20 zu bewegen und somit die Verriegelungselemente 23 zu entriegeln.

So kann das Betätigungsteil 25 zum Beispiel, wie dies in Fig. 38A-38E dargestellt ist, entlang einer zur Schließrichtung X senkrechten Verstellrichtung V5, zum Beispiel unter Zug an einer Betätigungslasche 252, bewegt werden, wobei durch Kraft- und Bewegungsumlenkung an den Kraftumlenkabschnitten 251 das Verstellteil 21 in die entlang der Schließrichtung X gerichtete Verstellrichtung V1 an dem Körper 20 bewegt wird und die Verriegelungselemente 23 somit mitgenommen und entriegelt werden, wie dies aus Fig. 38D ersichtlich ist. Das Betätigungsteil 25 kann somit senkrecht zur Schließrichtung X in die Verstellrichtung V5 betätigt werden.

Zudem kann ein Nutzer auch in die Schließrichtung X, also in die Verstellrichtung V1, auf das Betätigungsteil 25 drücken und das Betätigungsteil 25 somit gemeinsam mit dem Verstellteil 21 in die Verstellrichtung V1 an dem Körper 20 bewegen. Wiederum werden Verriegelungselemente 23 mitgenommen und somit entriegelt.

Nach Entriegelung können die Verschlussteile 2, 3 voneinander abgenommen werden, wie dies aus Fig. 39A bis 39E ersichtlich ist, sodass die Verschlussvorrichtung 1 geöffnet werden kann.

Bei einem Verstellen des Betätigungsteils 25 wird auch das Gehäuseteil 202 mit der daran angeordneten Magneteinrichtung 22 relativ zu dem Körper 20 bewegt, sodass die Magneteinrichtungen 22, 32 voneinander entfernt und eine magnetische Anziehung somit abgeschwächt oder gegebenenfalls sogar für eine Abstoßung umgepolt wird. Das Abnehmen der Verschlussteile 2, 3 wird somit zusätzlich erleichtert.

Der der Erfindung zugrunde liegende Gedanke ist nicht auf die vorangehend beschriebenen Ausführungsbeispiele beschränkt, sondern lässt sich auch in anderer Weise verwirklichen.

Eine Verschlussvorrichtung der beschriebenen Art kann zum Verbinden ganz unterschiedlicher Baugruppen miteinander dienen. Über die Verschlussvorrichtung kann hierbei in der Schließstellung eine mechanisch feste Verbindung zwischen den Baugruppen geschaffen werden, die durch Betätigung einer jeweiligen Verstellbaugruppe einfach und komfortabel geöffnet werden kann.

### Bezugszeichenliste

- 1: Verschlussvorrichtung
- 2: Verschlussteil
- 20: Körper
- 200: Eingriffsöffnung
- 201: Führungszapfen
- 202: Gehäuseteil
- 203: Aufnahmeöffnung
- 204: Schrägfläche
- 205: Eingriffsöffnung
- 206, 207: Kraftumlenkabschnitt (kraftumlenkende Schräge)
- 208: Führungsöffnung
- 209: Lagerelement
- 21: Verstellteil
- 210: Verstellkörper
- 211: Verstellelement
- 212: Verstellelement (radial nach innen vorspringender Randabschnitt)
- 213: Lasche
- 214: Drückabschnitt
- 215: Führungselement
- 22: Magneteinrichtung
- 23: Verriegelungselement
- 25: Betätigungsteil
- 250: Schenkel
- 251: Kraftumlenkabschnitt (kraftumlenkende Schräge)
- 252: Betätigungslasche
- 253: Steg
- 260: Führungsnut
- 261: Führungselement
- 27: Vorspanneinrichtung3 Verschlussteil
- 30: Basis
- 31: Eingriffselement
- 310: Eingriffsabschnitt
- 311: Führungsnut
- 312: Schrägfläche
- 32: Magneteinrichtung
- A: Betätigungsrichtung
- B: Belastungsrichtung
- X: Schließrichtung
- V1-V5: Verstellrichtung

## Patentansprüche

1. Verschlussvorrichtung (1), mit
einem ersten Verschlussteil (2), das einen Körper (20) aufweist,
einem zweiten Verschlussteil (3), wobei das erste Verschlussteil (2) und das zweite Verschlussteil (3) zum Schließen der Verschlussvorrichtung (1) entlang einer Schließrichtung (X) aneinander ansetzbar und in einer Schließstellung der Verschlussvorrichtung (1) miteinander verbunden sind,
zumindest einem Verriegelungselement (23), das verstellbar an dem Körper (20) des ersten Verschlussteils (2) angeordnet ist,
zumindest einem Eingriffselement (31), das an dem zweiten Verschlussteil (3) angeordnet ist und zumindest einen Eingriffsabschnitt (310) ausbildet, wobei das zumindest eine Verriegelungselement (23) in einer Verriegelungsstellung derart mit dem zumindest einen Eingriffsabschnitt (310) in Eingriff steht, dass das erste Verschlussteil (2) und das zweite Verschlussteil (3) in der Schließstellung entlang der Schließrichtung (X) aneinander gehalten sind, und
einer an dem ersten Verschlussteil (2) angeordneten Verstellbaugruppe, die ein Verstellteil (21) aufweist, das betätigbar ist, um das zumindest eine Verriegelungselement (23) zum Lösen des ersten Verschlussteils (2) und des zweiten Verschlussteils (3) voneinander aus der Verriegelungsstellung in eine Richtung senkrecht oder schräg zur Schließrichtung (X) relativ zu dem zumindest einen Eingriffsabschnitt (310) zu bewegen, wobei das Verstellteil (21) zum Bewegen des zumindest einen Verriegelungselements (23) an dem Körper (20) des ersten Verschlussteils (2) verstellbar ist,
**dadurch gekennzeichnet, dass** die Verstellbaugruppe mit unterschiedlichen Öffnungsbewegungen zum Bewegen des zumindest einen Verriegelungselements (23) relativ zu dem Körper (20) betätigbar ist, wobei die Verstellbaugruppe zum Ausführen einer ersten Öffnungsbewegung entlang einer entlang der Schließrichtung (X) gerichteten oder von der Schließrichtung (X) abweichenden, ersten Verstellrichtung (V1) relativ zu dem Körper (20) betätigbar ist und zum Ausführen einer von der ersten Öffnungsbewegung unterschiedlichen, zweiten Öffnungsbewegung entlang einer von der ersten Verstellrichtung (V1) abweichenden, zweiten Verstellrichtung (V2-V5) relativ zu dem Körper (20) betätigbar ist, wobei sowohl die erste Öffnungsbewegung als auch die zweite Öffnungsbewegung ein Bewegen des zumindest einen Verriegelungselements (23) aus der Verriegelungsstellung bewirken.

2. Verschlussvorrichtung (1) nach Anspruch 1, **dadurch gekennzeichnet, dass** die zweite Öffnungsbewegung eine Bewegung entlang einer zur Schließrichtung (X) senkrechten oder schrägen Richtung, eine Kippbewegung um eine zur Schließrichtung (X) senkrechte Kippachse und/oder eine Drehbewegung um eine entlang der Schließrichtung (X) gerichtete Drehachse umfasst.

3. Verschlussvorrichtung (1) nach Anspruch 1 oder 2, **dadurch gekennzeichnet, dass** das Verstellteil (21) durch einen Nutzer zum wahlweisen Ausführen der ersten Öffnungsbewegung oder der zweiten Öffnungsbewegung betätigbar ist, wobei insbesondere das Verstellteil (21) und/oder der Körper (20) einen Kraftumlenkabschnitt (206, 207) zur Herstellung einer Wirkverbindung zwischen dem Körper (20) und dem Verstellteil (21) aufweisen, wobei der Kraftumlenkabschnitt (206, 207) ausgebildet ist, bei Ausführen der zweiten Öffnungsbewegung eine Kraftumlenkung zum Verstellen des Verstellteils (21) relativ zu dem Körper (20) entlang der Schließrichtung (X) zu bewirken, wobei insbesondere der Kraftumlenkabschnitt (206, 207) eine schräg zur Schließrichtung (X) erstreckte Führungsfläche aufweist.

4. Verschlussvorrichtung (1) nach Anspruch 1 oder 2, **dadurch gekennzeichnet, dass** die Verstellbaugruppe ein mit dem Verstellteil (21) wirkverbundenes Betätigungsteil (25) aufweist, wobei das Betätigungsteil (25) durch einen Nutzer zum wahlweisen Ausführen der ersten Öffnungsbewegung oder der zweiten Öffnungsbewegung betätigbar ist, wobei insbesondere das Verstellteil (21) ausschließlich entlang der Schließrichtung (X) an dem Körper (20) verstellbar ist, wobei das Betätigungsteil (25) ausgebildet ist, sowohl bei Ausführen der ersten Öffnungsbewegung als auch bei Ausführen der zweiten Öffnungsbewegung das Verstellteil (21) entlang der Schließrichtung (X) an dem Körper (20) zu verstellen.

5. Verschlussvorrichtung (1) nach Anspruch 4, **dadurch gekennzeichnet, dass** das Verstellteil (21) und/oder das Betätigungsteil (25) einen Kraftumlenkabschnitt (251) zur Herstellung einer Wirkverbindung zwischen dem Betätigungsteil (25) und dem Verstellteil (21) aufweisen, wobei der Kraftumlenkabschnitt (251) ausgebildet ist, bei Ausführen der zweiten Öffnungsbewegung eine Kraftumlenkung zum Verstellen des Verstellteils (21) relativ zu dem Körper (20) entlang der Schließrichtung (X) zu bewirken, wobei insbesondere der Kraftumlenkabschnitt (206, 207) eine schräg zur Schließrichtung (X) erstreckte Führungsfläche aufweist.

6. Verschlussvorrichtung (1) nach einem der vorangehenden Ansprüche, **dadurch gekennzeichnet, dass** das Verstellteil (21) einen Verstellkörper (210) und ein an dem Verstellkörper (210) angeordnetes Verstellelement (211, 212) aufweist, das ausgebildet ist, bei Verstellen des Verstellteils (21) zum Lösen des ersten Verschlussteils (2) und des zweiten Verschlussteils (3) voneinander auf das zumindest eine Verriegelungselement (23) einzuwirken.

7. Verschlussvorrichtung (1) nach Anspruch 6, **dadurch gekennzeichnet, dass** das Verstellelement (211, 212) quer zur Schließrichtung (X) von dem Verstellkörper (210) vorspringt.

8. Verschlussvorrichtung (1) nach Anspruch 6 oder 7, **dadurch gekennzeichnet, dass** der Verstellkörper (210) durch einen um den Körper (20) des ersten Verschlussteils (2) herum erstreckten, insbesondere rechteckigen oder ringförmigen Rahmen ausgebildet ist.

9. Verschlussvorrichtung (1) nach einem der vorangehenden Ansprüche, **dadurch gekennzeichnet, dass** das erste Verschlussteil (2) eine erste Magneteinrichtung (22) und das zweite Verschlussteil (3) eine zweite Magneteinrichtung (32) aufweisen, wobei die erste Magneteinrichtung (22) und die zweite Magneteinrichtung (32) bei Ansetzen des ersten Verschlussteils (2) und des zweiten Verschlussteils (3) aneinander magnetisch anziehend zusammenwirken, wobei insbesondere das zumindest eine Verriegelungselement (23) magnetisch ausgebildet ist, wobei insbesondere das zumindest eine Verriegelungselement (23) in der Schließstellung der Verschlussvorrichtung (1) durch die erste Magneteinrichtung (22) und/oder die zweite Magneteinrichtung (32) in Richtung der Verriegelungsstellung belastet ist.

10. Verschlussvorrichtung (1) nach Anspruch 9, **dadurch gekennzeichnet, dass** die erste Magneteinrichtung (22) sowohl zu dem Körper (20) des ersten Verschlussteils (2) als auch zu dem Verstellteil (21) verstellbar ist.

11. Verschlussvorrichtung (1) nach Anspruch 10, **dadurch gekennzeichnet, dass** die erste Magneteinrichtung (22) bei der ersten Öffnungsbewegung und/oder bei der zweiten Öffnungsbewegung relativ zu dem Körper (20) und/oder relativ zu dem Verstellteil (21) bewegt wird und/oder dass die erste Magneteinrichtung (22) bei der ersten Öffnungsbewegung und/oder bei der zweiten Öffnungsbewegung relativ zu der zweiten Magneteinrichtung (32) des zweiten Verschlussteils (3) bewegt wird.

12. Verschlussvorrichtung (1) nach einem der vorangehenden Ansprüche, **dadurch gekennzeichnet, dass** das zumindest eine Verriegelungselement (23) in einer Ebene, die durch die Schließrichtung (X) und eine quer zur Schließrichtung (X) erstreckte Querrichtung aufgespannt ist, linear verstellbar oder verschwenkbar an dem ersten Verschlussteil (2) angeordnet ist.

13. Verschlussvorrichtung (1) nach einem der vorangehenden Ansprüche, **dadurch gekennzeichnet, dass** das zumindest eine Verriegelungselement (23) verstellbar in einer Aufnahmeöffnung (203) des ersten Verschlussteils (2) aufgenommen ist, wobei insbesondere die Aufnahmeöffnung (203) derart schräg zur Schließrichtung (X) und zu einer quer zur Schließrichtung (X) erstreckten Querrichtung erstreckt ist, dass das zumindest eine Verriegelungselement (23) entlang einer schräg zur Schließrichtung (X) und schräg zur Querrichtung erstreckten Bewegungsrichtung in der Aufnahmeöffnung (203) verstellbar ist, und/oder der Eingriffsabschnitt (310) eine schräg zur Schließrichtung (X) erstreckte, geradlinig erstreckte oder gekrümmte erste Schrägfläche (312) und das erste Verschlussteil (2) im Bereich der Aufnahmeöffnung (203) eine schräg zur Schließrichtung (X) erstreckte, geradlinig erstreckte oder gekrümmte zweite Schrägfläche (204) aufweisen, wobei in der Verriegelungsstellung das zumindest eine Verriegelungselement (23) zwischen der ersten Schrägfläche (312) und der zweiten Schrägfläche (204) angeordnet ist.

14. Verschlussvorrichtung (1) nach einem der vorangehenden Ansprüche, **dadurch gekennzeichnet, dass** das zumindest eine Verriegelungselement (23) senkrecht zu einer Ebene, die durch die Schließrichtung (X) und eine quer zur Schließrichtung (X) erstreckte Querrichtung (Q) aufgespannt ist, längserstreckt oder zumindest abschnittsweise umfänglich um die Schließrichtung (X) erstreckt ist.

15. Verschlussvorrichtung (1) nach einem der vorangehenden Ansprüche, **dadurch gekennzeichnet, dass** das zumindest eine Verriegelungselement (23) durch einen geradlinig erstreckten Stab oder einen Ring ausgebildet ist.

## Claims

1. Closure device (1), comprising
a first closure part (2) that comprises a body (20),
a second closure part (3), wherein the first closure part (2) and the second closure part (3) can be placed against one another for closing the closure device (1) along a closing direction (X) and are interconnected in a closed position of the closure device (1),
at least one locking element (23) which is adjustably arranged on the body (20) of the first closure part (2),
at least one engagement element (31) which is arranged on the second closure part (3) and forms at least one engagement portion (310), wherein the at least one locking element (23) is in engagement with the at least one engagement portion (310), in a locking position, such that the first closure part (2) and the second closure part (3) are held against one another, in the closed position, along the closing direction (X), and
an adjustment assembly which is arranged on the first closure part (2) and comprises an adjustment part (21) that is actuatable for moving the at least one locking element (23) out of the locking position in a direction perpendicular or oblique to the closure direction (X), relative to the at least one engagement portion (310), for releasing the first closure part (2) and the second closure part (3) from one another, wherein the adjustment part (21) for moving the at least one locking element (23) on the body (20) of the first closure part (2),
**characterised in that** the adjustment assembly is actuatable relative to the body (20) with different opening movements for moving the at least one locking element (23), wherein the adjustment assembly is actuatable relative to the body (20), for performing a first opening movement, along a first adjustment direction (V1) that is directed along the closing direction (X) or deviates from the closing direction (X), and for performing a second opening movement, different from the first opening movement, is actuatable relative to the body (20) along a second adjustment direction (V2-V5) that deviates from the first adjustment direction (V1), wherein both the first opening movement and the second opening movement cause the at least one locking element (23) to move out of the locking position.

2. Closure device (1) according to claim 1, **characterised in that** the second opening movement comprises a movement along a direction perpendicular or oblique to the closing direction (X), a tilting movement about a tilt axis perpendicular to the closing direction (X), and/or a rotational movement about an axis of rotation directed along the closing direction (X).

3. Closure device (1) according to either claim 1 or claim 2, **characterised in that** the adjustment part (21) is actuatable by a user for selectively performing the first opening movement or the second opening movement, wherein in particular the adjustment part (21) and/or the body (20) comprise a force deflection portion (206, 207) for establishing an operative connection between the body (20) and the adjustment part (21), wherein the force deflection portion (206, 207) is configured, when the second opening movement is performed, to bring about a force deflection for adjusting the adjustment part (21) relative to the body (20) along the closing direction (X), wherein in particular the force deflection portion (206, 207) has a guide surface that extends obliquely the closing direction (X).

4. Closure device (1) according to either claim 1 or claim 2, **characterised in that** the adjustment assembly comprises an actuation part (25) that is operatively connected to the adjustment part (21), wherein the actuation part (25) is actuatable by a user for selectively performing the first opening movement or the second opening movement, wherein in particular the adjustment part (21) is adjustable exclusively along the closing direction (X), on the body (20), wherein the actuation part (25) is configured to adjust the adjustment part (21) along the closing direction (X), on the body (20), both when the first opening movement is performed and when the second opening movement is performed.

5. Closure part (1) according to claim 4, **characterised in that** the adjustment part (21) and/or the actuation part (25) comprise a force deflection portion (251) for establishing an operative connection between the actuation part (25) and the adjustment part (21), wherein the force deflection portion (251) is configured to bring about a force deflection for adjusting the adjustment part (21) relative to the body (20) along the closing direction (X), when the second opening movement is being performed, wherein in particular the force deflection portion (206, 207) comprises a guide surface that extends obliquely to the closing direction (X).

6. Closure device (1) according to any of the preceding claims, **characterised in that** the adjustment part (21) comprises an adjustment body (210) and an adjustment element (211, 212) arranged on the adjustment body (210), which adjustment element is configured to act on the at least one locking element (23) upon adjustment of the adjustment part (21) for releasing the first closure part (2) and the second closure part (3) from one another.

7. Closure device (1) according to claim 6, **characterised in that** the adjustment element (211, 212) protrudes from the adjustment body (210) transversely to the closing direction (X).

8. Closure device (1) according to either claim 6 or claim 7, **characterised in that** the adjustment body (210) is formed by an in particular rectangular or annular frame that extends around the body (20) of the first closure part (2).

9. Closure device (1) according to any of the preceding claims, **characterised in that** the first closure part (2) comprises a first magnet means (22) and the second closure part (3) comprises a second magnet means (32), wherein the first magnet means (22) and the second magnet means (32) interact in a magnetically attracting manner when the first closure part (2) and the second closure part (3) are placed against one another, wherein in particular the at least one locking element (23) is configured to be magnetic, wherein in particular the at least one locking element (23) is loaded in the direction of the locking position, in the closed position of the closure device (1), by the first magnet means (22) and/or the second magnet means (32).

10. Closure device (1) according to claim 9, **characterised in that** the first magnet means (22) both to the body (20) of the first closure part (2) and to the closure part (21).

11. Closure device (1) according to claim 10, **characterised in that** the first magnet means (22) is moved relative to the body (20) and/or relative to the adjustment part (21) in the case of the first opening movement and/or in the case of the second opening movement, and/or **in that** the first magnet means (22) is moved relative to the second magnet means (32) of the second closure part (3) in the case of the first opening movement and/or in the case of the second opening movement.

12. Closure device (1) according to any of the preceding claims, **characterised in that** the at least one locking element (23) is arranged on the first closure part (2) so as to be linearly adjustable or pivotable in a plane that is spanned by the closing direction (X) and a transverse direction extending transversely to the closing direction (X).

13. Closure device (1) according to any of the preceding claims, **characterised in that** the at least one locking element (23) is received adjustably in a receiving opening (203) of the first closure part (2), wherein in particular the receiving opening (203) extends obliquely to the closing direction (X) and to a transverse direction extending transversely to the closing direction, in such a way that the at least one locking element (23) is adjustable in the receiving opening (203) in a movement direction extending obliquely to the closing direction (X) and obliquely to the transverse direction, and/or the engagement portion (310) comprises a straight extending or curved first oblique surface (312) that extends obliquely to the closing direction (X), and the first closure part (2) comprises, in the region of the receiving opening (203), a straight extending or curved second oblique surface (204) that extends obliquely to the closing direction (X), wherein in the locking position the at least one locking element (23) is arranged between the first oblique surface (312) and the second oblique surface (204).

14. Closure device (1) according to any of the preceding claims, **characterised in that** the at least one locking element (23) extends in an elongate manner or at least in portions peripherally around the closing direction (X), perpendicularly to the plane that is spanned by the closing direction (X) and a transverse direction (Q) that extends transversely to the closing direction (X).

15. Closure device (1) according to any of the preceding claims, **characterised in that** the at least one locking element (23) is formed by a straight extending rod or a ring.

## Revendications

1. Dispositif de fermeture (1) avec
une première partie de fermeture (2), qui présente un corps (20),
une seconde partie de fermeture (3), dans lequel la première partie de fermeture (2) et la seconde partie de fermeture (3) peuvent être placées l'une contre l'autre pour fermer le dispositif de fermeture (1) le long d'une direction de fermeture (X) et sont reliées l'une à l'autre dans une position de fermeture du dispositif de fermeture (1),
au moins un élément de verrouillage (23), qui est disposé de manière à pouvoir être ajusté sur le corps (20) de la première partie de fermeture (2),
au moins un élément de prise (31), qui est disposé sur la seconde partie de fermeture (3) et réalise au moins une section de prise (310), dans lequel l'au moins un élément de verrouillage (23) est en prise, dans une position de verrouillage, avec l'au moins une section de prise (310) de telle manière que la première partie de fermeture (2) et la seconde partie de fermeture (3) sont maintenues l'une sur l'autre dans la position de fermeture le long de la direction de fermeture (X), et
un module d'ajustement disposé sur la première partie de fermeture (2), qui présente une partie d'ajustement (21) qui peut être actionnée pour déplacer l'au moins un élément de verrouillage (23) pour détacher la première partie de fermeture (2) et la seconde partie de fermeture (3) l'une de l'autre depuis la position de verrouillage dans une direction de manière perpendiculaire ou de manière inclinée par rapport à la direction de fermeture (X) par rapport à l'au moins une section de prise (310), dans lequel la partie d'ajustement (21) peut être ajustée pour déplacer l'au moins un élément de verrouillage (23) sur le corps (20) de la première partie de fermeture (2),
**caractérisé en ce que** le module d'ajustement peut être actionné avec différents mouvements d'ouverture pour déplacer l'au moins un élément de verrouillage (23) par rapport au corps (20), dans lequel le module d'ajustement peut être actionné pour exécuter un premier mouvement d'ouverture le long d'une première direction d'ajustement (V1) dirigée le long de la direction de fermeture (X) ou s'écartant de la direction de fermeture (X) par rapport au corps (20) et peut être actionné pour exécuter un deuxième mouvement d'ouverture différent du premier mouvement d'ouverture le long d'une deuxième direction d'ajustement (V2 - V5) s'écartant de la première direction d'ajustement (V1) par rapport au corps (20), dans lequel à la fois le premier mouvement d'ouverture et le deuxième mouvement d'ouverture entraînent un déplacement de l'au moins un élément de verrouillage (23) hors de la position de verrouillage.

2. Dispositif de fermeture (1) selon la revendication 1, **caractérisé en ce que** le deuxième mouvement d'ouverture comprend un déplacement le long d'une direction perpendiculaire ou inclinée par rapport à la direction de fermeture (X), un mouvement de basculement autour d'un axe de basculement perpendiculaire à la direction de fermeture (X) et/ou un mouvement de rotation autour d'un axe de rotation dirigé le long de la direction de fermeture (X).

3. Dispositif de fermeture (1) selon la revendication 1 ou 2, **caractérisé en ce que** la partie d'ajustement (21) peut être actionnée par un utilisateur pour exécuter au choix le premier mouvement d'ouverture ou le deuxième mouvement d'ouverture, dans lequel en particulier la partie d'ajustement (21) et/ou le corps (20) présentent une section de renvoi de force (206, 207) destinée à établir une liaison fonctionnelle entre le corps (20) et la partie d'ajustement (21), dans lequel la section de renvoi de force (206, 207) est réalisée pour provoquer, lors de l'exécution du deuxième mouvement d'ouverture, un renvoi de force pour ajuster la partie d'ajustement (21) par rapport au corps (20) le long de la direction de fermeture (X), dans lequel en particulier la section de renvoi de force (206, 207) présente une surface de guidage s'étendant de manière inclinée par rapport à la direction de fermeture (X).

4. Dispositif de fermeture (1) selon la revendication 1 ou 2, **caractérisé en ce que** le module d'ajustement présente une partie d'actionnement (25) en liaison fonctionnelle avec la partie d'ajustement (21), dans lequel la partie d'actionnement (25) peut être actionnée par un utilisateur pour exécuter au choix le premier mouvement d'ouverture ou le deuxième mouvement d'ouverture, dans lequel en particulier la partie d'ajustement (21) peut être ajustée exclusivement le long de la direction de fermeture (X) sur le corps (20), dans lequel la partie d'actionnement (25) est réalisée pour ajuster à la fois, lors de l'exécution du premier mouvement d'ouverture et lors de l'exécution du deuxième mouvement d'ouverture, la partie d'ajustement (21) le long de la direction de fermeture (X) sur le corps (20).

5. Dispositif de fermeture (1) selon la revendication 4, **caractérisé en ce que** la partie d'ajustement (21) et/ou la partie d'actionnement (25) présentent une section de renvoi de force (251) destinée à établir une liaison fonctionnelle entre la partie d'actionnement (25) et la partie d'ajustement (21), dans lequel la section de renvoi de force (251) est réalisée pour provoquer lors de l'exécution du deuxième mouvement d'ouverture un renvoi de force pour ajuster la partie d'ajustement (21) par rapport au corps (20) le long de la direction de fermeture (X), dans lequel en particulier la section de renvoi de force (206, 207) présente une surface de guidage s'étendant de manière inclinée par rapport à la direction de fermeture (X).

6. Dispositif de fermeture (1) selon l'une quelconque des revendications précédentes, **caractérisé en ce que** la partie d'ajustement (21) présente un corps d'ajustement (210) et un élément d'ajustement (211, 212) disposé sur le corps d'ajustement (210), qui est réalisé pour agir sur l'au moins un élément de verrouillage (23) lors de l'ajustement de la partie d'ajustement (21) pour détacher la première partie de fermeture (2) et la seconde partie de fermeture (3) l'une de l'autre.

7. Dispositif de fermeture (1) selon la revendication 6, **caractérisé en ce que** l'élément d'ajustement (211, 212) fait saillie du corps d'ajustement (210) de manière transversale par rapport à la direction de fermeture (X).

8. Dispositif de fermeture (1) selon la revendication 6 ou 7, **caractérisé en ce que** le corps d'ajustement (210) est réalisé par un cadre, en particulier rectangulaire ou annulaire, s'étendant tout autour du corps (20) de la première partie de fermeture (2).

9. Dispositif de fermeture (1) selon l'une quelconque des revendications précédentes, **caractérisé en ce que** la première partie de fermeture (2) présente un premier système magnétique (22) et la seconde partie de fermeture (3) présente un second système magnétique (32), dans lequel le premier système magnétique (22) et le second système magnétique (32) coopèrent de manière à s'attirer magnétiquement lors du placement de la première partie de fermeture (2) et de la seconde partie de fermeture (3) l'une sur l'autre, dans lequel en particulier l'au moins un élément de verrouillage (23) est réalisé de manière magnétique, dans lequel en particulier l'au moins un élément de verrouillage (23) est contraint en direction de la position de verrouillage par le premier système magnétique (22) et/ou le second système magnétique (32) dans la position de fermeture du dispositif de fermeture (1).

10. Dispositif de fermeture (1) selon la revendication 9, **caractérisé en ce que** le premier système magnétique (22) peut être ajusté à la fois par rapport au corps (20) de la première partie de fermeture (2) et par rapport à la partie d'ajustement (21).

11. Dispositif de fermeture (1) selon la revendication 10, **caractérisé en ce que** le premier système magnétique (22) est déplacé par rapport au corps (20) et/ou par rapport à la partie d'ajustement (21) lors du premier mouvement d'ouverture et/ou lors du deuxième mouvement d'ouverture, et/ou que le premier système magnétique (22) est déplacé par rapport au deuxième système magnétique (32) de la seconde partie de fermeture (3) lors du premier mouvement d'ouverture et/ou lors du deuxième mouvement d'ouverture.

12. Dispositif de fermeture (1) selon l'une quelconque des revendications précédentes, **caractérisé en ce que** l'au moins un élément de verrouillage (23) peut être ajusté linéairement ou est disposé sur la première partie de fermeture (2) de manière à pouvoir pivoter dans un plan, qui est formé par la direction de fermeture (X) et une direction transversale s'étendant de manière transversale par rapport à la direction de fermeture (X).

13. Dispositif de fermeture (1) selon l'une quelconque des revendications précédentes, **caractérisé en ce que** l'au moins un élément de verrouillage (23) est logé de manière à pouvoir être ajusté dans une ouverture de logement (203) de la première partie d'ajustement (2), dans lequel en particulier l'ouverture de logement (203) s'étend de manière inclinée par rapport à la direction de fermeture (X) et par rapport à une direction transversale s'étendant de manière transversale par rapport à la direction de fermeture (X) de telle manière que l'au moins un élément de verrouillage (23) peut être ajusté le long d'une direction de mouvement s'étendant de manière inclinée par rapport à la direction de fermeture (X) et de manière inclinée par rapport à la direction transversale dans l'ouverture de logement (203), et/ou la section de prise (310) présente une première surface inclinée (312) s'étendant de manière inclinée par rapport à la direction de fermeture (X), s'étendant de manière rectiligne ou incurvée et la première partie de fermeture (2) présente dans la zone de l'ouverture de logement (203) une deuxième surface inclinée (204) s'étendant de manière inclinée par rapport à la direction de fermeture (X), s'étendant de manière rectiligne ou incurvée, dans lequel l'au moins un élément de verrouillage (23) est disposé entre la première surface inclinée (312) et la deuxième surface inclinée (204) dans la position de verrouillage.

14. Dispositif de fermeture (1) selon l'une quelconque des revendications précédentes, **caractérisé en ce que** l'au moins un élément de verrouillage (23) s'étend de manière étirée en longueur ou au moins par endroits en périphérie autour de la direction de fermeture (X) de manière perpendiculaire à un plan, qui est formé par la direction de fermeture (X) et une direction transversale (Q) s'étendant de manière transversale par rapport à la direction de fermeture (X).

15. Dispositif de fermeture (1) selon l'une quelconque des revendications précédentes, **caractérisé en ce que** l'au moins un élément de verrouillage (23) est réalisé par une tige s'étendant de manière rectiligne ou un anneau.
